(19) Europäisches Patentamt / European Patent Office / Office européen des brevets

(11) **EP 4 518 208 A1**

(12) **EUROPEAN PATENT APPLICATION**

(43) Date of publication:
05.03.2025 Bulletin 2025/10

(21) Application number: 24195912.1

(22) Date of filing: 22.08.2024

(51) International Patent Classification (IPC):
*H04L 1/00* (2006.01)   *H04B 7/06* (2006.01)
*H04L 5/00* (2006.01)   *H04L 25/02* (2006.01)

(52) Cooperative Patent Classification (CPC):
H04L 1/0026; H04B 7/0626; H04B 7/0645;
H04B 7/0658; H04L 1/0028; H04L 5/0048;
H04L 25/0228; H04L 25/0254

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 01.09.2023 FI 20235974

(71) Applicant: Nokia Solutions and Networks Oy
02610 Espoo (FI)

(72) Inventor: MAO, Xiaomao
Paris (FR)

(74) Representative: Nokia EPO representatives
Nokia Technologies Oy
Karakaari 7
02610 Espoo (FI)

(54) **ASSIGNMENT OF A CHANNEL STATE INFORMATION SIZE AND OF A CHANNEL STATE INFORMATION REFERENCE SIGNAL PATTERN**

(57)     There is provided an apparatus (400) for channel state information feedback in a cellular communication network, the apparatus comprising: means for determining an optimal pair comprising a channel state information feedback size threshold defining a maximum number of bits for channel state information feedback, and a channel state information reference signal pattern, wherein the optimal pair is optimal for a user equipment; based on the determined optimal pair and at least one of cell load information and cell performance information, means for assigning to the user equipment, a pair comprising a channel state information feedback size threshold defining a maximum number of bits for channel state information feedback and channel state information reference signal pattern; and means for transmitting, to the user equipment, information indicating the assigned pair.

S801 — Determining an optimal pair comprising a channel state information feedback size threshold defining a maximum number of bits for channel state information feedback, and a channel state information reference signal pattern, wherein the optimal pair is optimal for a user equipment.

S802 — Based on the determined optimal pair and at least one of cell load information and cell performance information, assigning to the user equipment, a pair comprising a channel state information feedback size threshold defining a maximum number of bits for channel state information feedback and channel state information reference signal pattern.

S803 — Transmitting, to the user equipment, information indicating the assigned pair.

Fig. 8

**Description**

<u>FIELD</u>

The present application relates to a method, apparatus, and computer program and in particular but not exclusively to channel state information feedback.

<u>BACKGROUND</u>

A communication system can be seen as a facility that enables communication sessions between two or more entities such as user terminals, base stations and/or other nodes by providing carriers between the various entities involved in the communications path. A communication system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet. In a wireless communication system at least a part of a communication session between at least two stations occurs over a wireless link. Examples of wireless systems comprise public land mobile networks (PLMN), satellite based communication systems and different wireless local networks, for example wireless local area networks (WLAN). Some wireless systems can be divided into cells, and are therefore often referred to as cellular systems.

A user can access the communication system by means of an appropriate communication device or terminal. A communication device of a user may be referred to as user equipment (UE) or user device.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is UTRAN (3G radio). Other examples of communication systems are the long-term evolution (LTE) of the Universal Mobile Telecommunications System (UMTS) radio-access technology and so-called 5G or New Radio (NR) networks. NR is being standardized by the 3rd Generation Partnership Project (3GPP). Other examples of communication systems include 5G-Advanced (NR Rel-18 and beyond) and 6G.

A feature of modern communication systems is known as Channel State Information (CSI) feedback overhead. CSI feedback enhancement, such as CSI feedback compression or CSI overhead reduction, is used to improve the performance of CSI feedback overhead.

<u>SUMMARY</u>

According to a first aspect there is disclosed an apparatus for channel state information feedback in a cellular communication network comprising: means for determining an optimal pair comprising a channel state information feedback size threshold defining a maximum number of bits for channel state information feedback, and a channel state information reference signal pattern, wherein the optimal pair is optimal for a user equipment; means for assigning to the user equipment, based on the determined optimal pair and at least one of cell load information and cell performance information, a pair comprising a channel state information feedback size threshold defining a maximum number of bits for channel state information feedback and channel state information reference signal pattern; and means for transmitting, to the user equipment, information indicating the assigned pair.

The optimal pair refers to the channel state information reference signal, CSI-RS, pattern and channel state information, CSI, feedback size threshold pair which together may achieve a certain CSI recovery performance (e.g., mean square error, MSE) that the UE expects to achieve.

According to some examples, the apparatus further comprising means for: receiving, from the user equipment, channel state information feedback bits based on the assigned pair.

According to some examples, determining the optimal pair comprises: determining a plurality of pairs comprising a channel state information reference signal pattern and channel state information feedback size threshold based on an estimation or measurement of radio channel characteristics; and selecting the optimal pair from among the determined plurality of pairs.

According to some examples, determining the plurality of pairs based on using a default channel state information feedback size threshold and channel state information reference signal pattern pair.

According to some examples, the means for determining the optimal pair comprises: determining an estimated channel recovery mean square error of a feedback recovery method associated with each of the plurality pairs; determining an estimated overhead associated with each of the plurality pairs; and selecting the optimal pair from among the plurality of pairs based on at least one of: the determined channel recovery mean square error; and the determined overhead.

According to some examples, the overhead associated with each of the plurality pairs comprises at least one of: a channel state information feedback overhead; and a channel state information reference signal pilot resource elements overhead.

According to some examples, the apparatus further comprising means for determining the estimated channel recovery mean square error and overhead associated with each of the plurality pairs using at least one neural network.

According to some examples, the at least one neural network is a convolutional neural network.

According to some examples, the apparatus further comprising means for training and testing the at least one neural network using a channel wherein the channel is obtained by the apparatus using uplink-downlink reciprocity.

According to some examples, the apparatus further comprising means for constructing a plurality of neural networks, wherein each neural network of the plurality of neural networks is used to determine the estimated channel recovery mean square error and estimated overhead associated with one of the plurality pairs.

According to some examples, the apparatus further comprising means for training and testing the plurality of neural networks in parallel.

According to some examples, the apparatus comprising means for determining the feedback recovery method and transmitting information of the feedback recovery method to the user equipment, wherein the feedback recovery method comprises information indicating at least one of: how the apparatus recovers channel state information feedback bits; and how the apparatus reconstructs a channel.

According to some examples, the apparatus further comprising means for building a separate machine learning model on top of the at least one neural network, wherein the machine learning model learns the structure of the at least one neural network.

According to some examples, the apparatus comprises an access node.

According to a second aspect there is provided an apparatus comprising at least one processor; and at least one memory storing instructions that, when executed by the at least one processor, cause the apparatus at least to perform: determining an optimal pair comprising a channel state information feedback size threshold defining a maximum number of bits for channel state information feedback, and a channel state information reference signal pattern, wherein the optimal pair is optimal for a user equipment; based on the determined optimal pair and at least one of cell load information and cell performance information, assigning to the user equipment, a pair comprising a channel state information feedback size threshold defining a maximum number of bits for channel state information feedback and channel state information reference signal pattern; and transmitting, to the user equipment, information indicating the assigned pair.

According to a third aspect there is provided an apparatus for channel state information feedback in a cellular communication network, the apparatus comprising: means for receiving, from an access node, information indicating an assigned pair comprising a channel state information feedback size threshold defining a maximum number of bits for channel state information feedback, and a channel state information reference signal pattern; and means for determining channel state information feedback bits based on the assigned pair.

According to some examples, the apparatus further comprising means for determining the channel state information feedback bits using at least one neural network.

According to some examples, the apparatus further comprising means for transmitting, to the access node, the determined channel state information feedback bits.

According to some examples, the apparatus comprises a user equipment.

According to a fourth aspect there is provided an apparatus comprising at least one processor; and at least one memory storing instructions that, when executed by the at least one processor, cause the apparatus at least to perform: receiving, from an access node, information indicating an assigned pair comprising a channel state information feedback size threshold defining a maximum number of bits for channel state information feedback, and a channel state information reference signal pattern; and determining channel state information feedback bits based on the assigned pair.

According to a fifth aspect there is provided an apparatus for channel state information feedback in a cellular communication network, the apparatus comprising: means for determining an optimal pair comprising a channel state information feedback size threshold defining a maximum number of bits for channel state information feedback, and a channel state information reference signal pattern, wherein the optimal pair is optimal for the apparatus; means for transmitting, to an access node, information indicating the determined optimal pair; means for receiving, from the access node, information indicating an assigned pair comprising a channel state information feedback size threshold defining a maximum number of bits for channel state information feedback, and a channel state information reference signal pattern; and means for determining channel state information feedback bits based on the assigned pair.

According to some examples, the apparatus further comprising means for determining the channel state channel state information feedback bits using at least one neural network.

According to some examples, the apparatus further comprising means for transmitting, to the access node, the determined channel state information feedback bits.

According to some examples, determining the optimal pair comprises: determining a plurality of pairs comprising a channel state information reference signal pattern and channel state information feedback size threshold based on an estimation or measurement of radio channel characteristics; and selecting the optimal pair from among the determined plurality of pairs.

According to some examples, determining the plurality of pairs based on using a default channel state information feedback size threshold and channel state information reference signal pattern pair.

According to some examples, wherein the means for determining the optimal pair comprises: determining an estimated channel recovery mean square error of a feedback recovery method associated with each of the plurality pairs; determining an estimated overhead associated with each of the plurality pairs; and selecting the optimal pair from among the plurality of pairs based on at least one of: the determined channel recovery mean square error; and the determined overhead.

According to some examples the overhead associated with each of the plurality pairs comprises at least one of: a channel state information feedback overhead; and a channel state information reference signal pilot resource elements overhead.

According to some examples, the apparatus further comprising means for determining the estimated channel recovery mean square error and overhead associated with each of the plurality pairs using at least one neural network.

According to some examples, the at least one neural network is a convolutional neural network.

According to some examples, the apparatus further comprising means for training and testing the at least one neural network using a channel determined by data aided channel estimation.

According to some examples, the apparatus further comprising means for constructing a plurality of neural networks, wherein each neural network of the plurality of neural networks is used to determine the estimated channel recovery mean square error and estimated overhead associated with one of the plurality pairs.

According to some examples, the apparatus further comprising means for training and testing the plurality of neural networks in parallel.

According to some examples, the apparatus further comprising means for receiving information of the feedback recovery method from the access node, wherein information of the feedback recovery method comprises information indicating at least one of: how the access node recovers channel state information feedback bits; and how the access node reconstructs a channel.

According to some examples, the apparatus further comprising means for building a separate machine learning model on top of the at least one neural network, wherein the machine learning model learns the structure of the at least one neural network .

According to some examples, the apparatus comprises a user equipment.

According to a sixth aspect there is provided an apparatus comprising at least one processor; and at least one memory storing instructions that, when executed by the at least one processor, cause the apparatus at least to perform: determining an optimal pair comprising a channel state information feedback size threshold defining a maximum number of bits for channel state information feedback, and a channel state information reference signal pattern, wherein the optimal pair is optimal for the apparatus; transmitting, to an access node, information indicating the determined optimal pair; receiving, from the access node, information indicating an assigned pair comprising a channel state information feedback size threshold defining a maximum number of bits for channel state information feedback, and a channel state information reference signal pattern; and determining channel state information feedback bits based on the assigned pair.

According to a seventh aspect there is provided an apparatus for channel state information feedback in a cellular communication network, the apparatus comprising: means for receiving, from a user equipment, an optimal pair comprising a channel state information feedback size threshold defining a maximum number of bits for channel state information feedback, and a channel state information reference signal pattern, wherein the optimal pair is optimal for the user equipment; means for assigning to the user equipment, based on the determined optimal pair and at least one of cell load information and cell performance information, a pair comprising a channel state information feedback size threshold defining a maximum number of bits for channel state information feedback and channel state information reference signal pattern; and means for transmitting, to the user equipment, information indicating the assigned pair.

According to some examples, the apparatus further comprising means for receiving, from the user equipment, channel state information feedback bits, based on the assigned pair.

According to some examples, the apparatus comprises an access node.

According to an eighth aspect there is provided an apparatus comprising at least one processor; and at least one memory storing instructions that, when executed by the at least one processor, cause the apparatus at least to perform: receiving, from a user equipment, an optimal pair comprising a channel state information feedback size threshold defining a maximum number of bits for channel state information feedback, and a channel state information reference signal pattern, wherein the optimal pair is optimal for the user equipment; based on the determined optimal pair and at least one of cell load information and cell performance information, assigning, to the user equipment, a pair comprising a channel state information feedback size threshold defining a maximum number of bits for channel state information feedback and channel state information reference signal pattern; and transmitting, to the user equipment, information indicating the assigned pair.

According to a ninth aspect there is provided a method comprising: determining an optimal pair comprising a channel state information feedback size threshold defining a maximum number of bits for channel state information feedback, and a channel state information reference signal pattern, wherein the optimal pair is optimal for a user equipment; based on the determined optimal pair and at least one of cell load information and cell performance information, assigning, to the user equipment, a pair comprising a channel state information feedback size threshold defining a maximum number of bits for channel state information feedback and channel state information reference signal pattern; and transmitting, to the user equipment, information indicating the assigned pair.

According to some examples, the method further comprises: receiving, from the user equipment, channel state information feedback bits based on the assigned pair.

According to some examples, determining the optimal pair comprises: determining a plurality of pairs comprising a channel state information reference signal pattern and channel state information feedback size threshold based on an estimation or measurement of radio channel characteristics; and selecting the optimal pair from among the determined plurality of pairs.

According to some examples, determining the plurality of pairs based on using a default channel state information feedback size threshold and channel state information reference signal pattern pair.

According to some examples, determining the optimal pair comprises: determining an estimated channel recovery mean square error of a feedback recovery method associated with each of the plurality pairs; determining an estimated overhead associated with each of the plurality pairs; and selecting the optimal pair from among the plurality of pairs based on at least one of: the determined channel recovery mean square error; and the determined overhead.

According to some examples, the overhead associated with each of the plurality pairs comprises at least one of: a channel state information feedback overhead; and a channel state information reference signal pilot resource elements overhead.

According to some examples, the method further comprising: determining the estimated channel recovery mean square error and overhead associated with each of the plurality pairs using at least one neural network.

According to some examples, the at least one neural network is a convolutional neural network.

According to some examples, the method further comprising: training and testing the at least one neural network using a channel, wherein the channel is obtained by the apparatus using uplink-downlink reciprocity.

According to some examples, the method further comprising: constructing a plurality of neural networks, wherein each neural network of the plurality of neural networks is used to determine the estimated channel recovery mean square error and estimated overhead associated with one of the plurality pairs.

According to some examples, the method further comprising training and testing the plurality of neural networks in parallel.

According to some examples, the method comprising: determining the feedback recovery method and transmitting information of the feedback recovery method to the user equipment, wherein the feedback recovery method comprises information indicating at least one of: how an access node recovers channel state information feedback bits; and how the access node reconstructs a channel.

According to some examples, the method further comprising building a separate machine learning model on top of the at least one neural network, wherein the machine learning model learns the structure of the at least one neural network .

According to some examples, the method is performed by an access node.

According to a tenth aspect there is provided a method comprising: receiving, from an access node, information indicating an assigned pair comprising a channel state information feedback size threshold defining a maximum number of bits for channel state information feedback, and a channel state information reference signal pattern; and determining channel state information feedback bits based on the assigned pair.

According to some examples, the method further comprises determining the channel state information feedback bits using at least one neural network.

According to some examples, the method further comprises transmitting, to the access node, the determined channel state information feedback bits.

According to some examples, the method is performed by a user equipment.

According to an eleventh aspect there is provided a method comprising: determining an optimal pair comprising a channel state information feedback size threshold defining a maximum number of bits for channel state information feedback, and a channel state information reference signal pattern, wherein the optimal pair is optimal for a user equipment; transmitting, to an access node, information indicating the determined optimal pair; receiving, from the access node, information indicating an assigned pair comprising a channel state information feedback size threshold defining a maximum number of bits for channel state information feedback, and a channel state information reference signal pattern; and determining channel state information feedback bits based on the assigned pair.

According to some examples, the method further comprising determining the channel state channel state information feedback bits using at least one neural network.

According to some examples, the method further comprising transmitting, to the access node, the determined channel state information feedback bits.

According to some examples, determining the optimal pair comprises: determining a plurality of pairs comprising a channel state information reference signal pattern and channel state information feedback size threshold based on an estimation or measurement of radio channel characteristics; and selecting the optimal pair from among the determined plurality of pairs.

According to some examples, determining the plurality of pairs based on using a default channel state information feedback size threshold and channel state information reference signal pattern pair.

According to some examples, determining the optimal pair comprises: determining an estimated channel recovery mean square error of a feedback recovery method associated with each of the plurality pairs; determining an estimated overhead associated with each of the plurality pairs; and selecting the optimal pair from among the plurality of pairs based on at least one of: the determined channel recovery mean square error; and the determined overhead.

According to some examples the overhead associated with each of the plurality pairs comprises at least one of: a channel state information feedback overhead; and a channel state information reference signal pilot resource elements overhead.

According to some examples, the method further comprising determining the estimated channel recovery mean square error and overhead associated with each of the plurality pairs using at least one neural network.

According to some examples, the at least one neural network is a convolutional neural network.

According to some examples, the method further comprising training and testing the at least one neural network using a channel determined by data aided channel estimation.

According to some examples, the method further comprising constructing a plurality of neural networks, wherein each neural network of the plurality of neural networks is used to determine the estimated channel recovery mean square error and estimated overhead associated with one of the plurality pairs.

According to some examples, the method further comprising training and testing the plurality of neural networks in parallel.

According to some examples, the method further comprising receiving information of the feedback recovery method from the access node, wherein information of the feedback recovery method comprises information indicating at least one of: how the access node recovers channel state information feedback bits; and how the access node reconstructs a channel.

According to some examples, the method further comprising building a separate machine learning model on top of the at least one neural network, wherein the machine learning model learns the structure of the at least one neural network .

According to some examples, the method is performed by a user equipment.

According to a twelfth aspect there is provided a method comprising: receiving, from a user equipment, an optimal pair comprising a channel state information feedback size threshold defining a maximum number of bits for channel state information feedback, and a channel state information reference signal pattern, wherein the optimal pair is optimal for the user equipment; based on the determined optimal pair and at least one of cell load information and cell performance information, assigning to the user equipment, a pair comprising a channel state information feedback size threshold defining a maximum number of bits for channel state information feedback and channel state information reference signal pattern; and transmitting, to the user equipment, information indicating the assigned pair.

According to some examples, the method further comprising receiving, from the user equipment, channel state information feedback bits, based on the assigned pair.

According to some examples, the method is performed by an access node.

According to a thirteenth aspect there is provided a computer program comprising instructions for causing an apparatus to perform at least the following: determining an optimal pair comprising a channel state information feedback size threshold defining a maximum number of bits for channel state information feedback, and a channel state information reference signal pattern, wherein the optimal pair is optimal for a user equipment; based on the determined optimal pair and at least one of cell load information and cell performance information, assigning to the user equipment, a pair comprising a channel state information feedback size threshold defining a maximum number of bits for channel state information feedback and channel state information reference signal pattern; and transmitting, to the user equipment, information indicating the assigned pair.

According to some examples, the computer program comprises instructions for causing the apparatus to perform receiving, from the user equipment, channel state information feedback bits based on the assigned pair.

According to some examples, determining the optimal pair comprises: determining a plurality of pairs comprising a channel state information reference signal pattern and channel state information feedback size threshold based on an estimation or measurement of radio channel characteristics; and selecting the optimal pair from among the determined plurality of pairs.

According to some examples, determining the plurality of pairs based on using a default channel state information feedback size threshold and channel state information reference signal pattern pair.

According to some examples, determining the optimal pair comprises: determining an estimated channel recovery mean square error of a feedback recovery method associated with each of the plurality pairs; determining an estimated overhead associated with each of the plurality pairs; and selecting the optimal pair from among the plurality of pairs based on at least one of: the determined channel recovery mean square error; and the determined overhead.

According to some examples, the overhead associated with each of the plurality pairs comprises at least one of: a channel state information feedback overhead; and a channel state information reference signal pilot resource elements overhead.

According to some examples, the computer program comprises instructions for causing the apparatus to perform: determining the estimated channel recovery mean square error and overhead associated with each of the plurality pairs using at least one neural network.

According to some examples, the at least one neural network is a convolutional neural network.

According to some examples, the computer program comprises instructions for causing the apparatus to perform training and testing the at least one neural network using a channel, wherein the channel is obtained by the apparatus using uplink-downlink reciprocity.

According to some examples, the computer program comprises instructions for causing the apparatus to perform: constructing a plurality of neural networks, wherein each neural network of the plurality of neural networks is used to determine the estimated channel recovery mean square error and estimated overhead associated with one of the plurality pairs.

According to some examples, the computer program comprises instructions for causing the apparatus to perform: training and testing the plurality of neural networks in parallel.

According to some examples, the computer program comprises instructions for causing the apparatus to perform: determining the feedback recovery method and transmitting information of the feedback recovery method to the user equipment, wherein the feedback recovery method comprises information indicating at least one of: how the apparatus recovers channel state information feedback bits; and how the apparatus reconstructs a channel.

According to some examples, the computer program comprises instructions for causing the apparatus to perform: building a separate machine learning model on top of the at least one neural network, wherein the machine learning model learns the structure of the at least one neural network .

According to some examples, the apparatus comprises an access node.

According to a fourteenth aspect there is provided a computer program comprising instructions for causing an apparatus to perform at least the following: receiving, from an access node, information indicating an assigned pair comprising a channel state information feedback size threshold defining a maximum number of bits for channel state information feedback, and a channel state information reference signal pattern; and determining channel state information feedback bits based on the assigned pair.

According to some examples, the computer program comprises instructions for causing the apparatus to perform: determining the channel state information feedback bits using at least one neural network.

According to some examples, the computer program comprises instructions for causing the apparatus to perform: transmitting, to the access node, the determined channel state information feedback bits.

According to some examples, the apparatus comprises a user equipment.

According to a fifteenth aspect there is provided a computer program comprising instructions for causing an apparatus to perform at least the following: determining an optimal pair comprising a channel state information feedback size threshold defining a maximum number of bits for channel state information feedback, and a channel state information reference signal pattern, wherein the optimal pair is optimal for the apparatus; transmitting, to an access node, information indicating the determined optimal pair; receiving, from the access node, information indicating an assigned pair comprising a channel state information feedback size threshold defining a maximum number of bits for channel state information feedback, and a channel state information reference signal pattern; and determining channel state information feedback bits based on the assigned pair.

According to some examples, the computer program comprises instructions for causing the apparatus to perform: determining the channel state channel state information feedback bits using at least one neural network.

According to some examples, the computer program comprises instructions for causing the apparatus to perform: transmitting, to the access node, the determined channel state information feedback bits.

According to some examples, determining the optimal pair comprises: determining a plurality of pairs comprising a channel state information reference signal pattern and channel state information feedback size threshold based on an estimation or measurement of radio channel characteristics; and selecting the optimal pair from among the determined plurality of pairs.

According to some examples, determining the plurality of pairs based on using a default channel state information feedback size threshold and channel state information reference signal pattern pair.

According to some examples, determining the optimal pair comprises: determining an estimated channel recovery mean square error of a feedback recovery method associated with each of the plurality pairs; determining an estimated overhead associated with each of the plurality pairs; and selecting the optimal pair from among the plurality of pairs based on at least one of: the determined channel recovery mean square error; and the determined overhead.

According to some examples the overhead associated with each of the plurality pairs comprises at least one of: a channel state information feedback overhead; and a channel state information reference signal pilot resource elements overhead.

According to some examples, the computer program comprises instructions for causing the apparatus to perform: determining the estimated channel recovery mean square error and overhead associated with each of the plurality pairs using at least one neural network.

According to some examples, the at least one neural network is a convolutional neural network.

According to some examples, the computer program comprises instructions for causing the apparatus to perform: training and testing the at least one neural network using a channel determined by data aided channel estimation.

According to some examples, the computer program comprises instructions for causing the apparatus to perform: constructing a plurality of neural networks, wherein each neural network of the plurality of neural networks is used to determine the estimated channel recovery mean square error and estimated overhead associated with one of the plurality pairs.

According to some examples, the computer program comprises instructions for causing the apparatus to perform: training and testing the plurality of neural networks in parallel.

According to some examples, the computer program comprises instructions for causing the apparatus to perform: receiving information of the feedback recovery method from the access node, wherein information of the feedback recovery method comprises information indicating at least one of: how the access node recovers channel state information feedback bits; and how the access node reconstructs a channel.

According to some examples, the computer program comprises instructions for causing the apparatus to perform: building a separate machine learning model on top of the at least one neural network, wherein the machine learning model learns the structure of the at least one neural network.

According to some examples, the apparatus comprises a user equipment.

According to a sixteenth aspect there is provided a computer program comprising instructions for causing an apparatus to perform at least the following: receiving, from a user equipment, an optimal pair comprising a channel state information feedback size threshold defining a maximum number of bits for channel state information feedback, and a channel state information reference signal pattern, wherein the optimal pair is optimal for the user equipment; based on the determined optimal pair and at least one of cell load information and cell performance information, assigning to the user equipment, a pair comprising a channel state information feedback size threshold defining a maximum number of bits for channel state information feedback and channel state information reference signal pattern; and transmitting, to the user equipment, information indicating the assigned pair.

According to some examples, the computer program comprises instructions for causing the apparatus to perform: receiving, from the user equipment, channel state information feedback bits, based on the assigned pair.

According to some examples, the apparatus comprises an access node.

According to a seventeenth aspect there is provided a computer program comprising instructions stored thereon for performing at least the following: determining an optimal pair comprising a channel state information feedback size threshold defining a maximum number of bits for channel state information feedback, and a channel state information reference signal pattern, wherein the optimal pair is optimal for a user equipment; based on the determined optimal pair and at least one of cell load information and cell performance information, assigning to the user equipment, a pair comprising a channel state information feedback size threshold defining a maximum number of bits for channel state information feedback and channel state information reference signal pattern; and transmitting, to the user equipment, information indicating the assigned pair.

According to an eighteenth aspect there is provided a computer program comprising instructions stored thereon for performing at least the following: receiving, from an access node, information indicating an assigned pair comprising a channel state information feedback size threshold defining a maximum number of bits for channel state information feedback, and a channel state information reference signal pattern; and determining channel state information feedback bits based on the assigned pair.

According to a nineteenth aspect there is provided a computer program comprising instructions stored thereon for performing at least the following: determining an optimal pair comprising a channel state information feedback size threshold defining a maximum number of bits for channel state information feedback, and a channel state information reference signal pattern, wherein the optimal pair is optimal for a user equipment; transmitting, to an access node, information indicating the determined optimal pair; receiving, from the access node, information indicating an assigned pair comprising a channel state information feedback size threshold defining a maximum number of bits for channel state information feedback, and a channel state information reference signal pattern; and determining channel state information feedback bits based on the assigned pair.

According to a twentieth aspect there is provided a computer program comprising instructions stored thereon for performing at least the following: receiving, from a user equipment, an optimal pair comprising a channel state information feedback size threshold defining a maximum number of bits for channel state information feedback, and a channel state information reference signal pattern, wherein the optimal pair is optimal for the user equipment; based on the determined optimal pair and at least one of cell load information and cell performance information, assigning to the user equipment, a pair comprising a channel state information feedback size threshold defining a maximum number of bits for channel state information feedback and channel state information reference signal pattern t; and transmitting, to the user equipment, information indicating the assigned pair.

According to a twenty-first aspect there is provided a non-transitory computer readable medium comprising program instructions that, when executed by an apparatus, cause the apparatus to perform at least the following: determining an optimal pair comprising a channel state information feedback size threshold defining a maximum number of bits for channel state information feedback, and a channel state information reference signal pattern, wherein the optimal pair is optimal for a user equipment; based on the determined optimal pair and at least one of cell load information and cell performance information, assigning to the user equipment, a pair comprising a channel state information feedback size threshold defining a maximum number of bits for channel state information feedback and channel state information reference signal pattern; and transmitting, to the user equipment, information indicating the assigned pair.

According to a twenty-second aspect there is provided a non-transitory computer readable medium comprising program instructions that, when executed by an apparatus, cause the apparatus to perform at least the following: receiving, from an access node, information indicating an assigned pair comprising a channel state information feedback size threshold defining a maximum number of bits for channel state information feedback, and a channel state information reference signal pattern; and determining channel state information feedback bits based on the assigned pair.

According to a twenty-third aspect there is provided a non-transitory computer readable medium comprising program instructions that, when executed by an apparatus, cause the apparatus to perform at least the following: determining an optimal pair comprising a channel state information feedback size threshold defining a maximum number of bits for channel state information feedback, and a channel state information reference signal pattern, wherein the optimal pair is optimal for the apparatus; transmitting, to an access node, information indicating the determined optimal pair; receiving, from the access node, information indicating an assigned pair comprising a channel state information feedback size threshold defining a maximum number of bits for channel state information feedback, and a channel state information reference signal pattern; and determining channel state information feedback bits based on the assigned pair.

According to a twenty-fourth aspect there is provided a non-transitory computer readable medium comprising program instructions that, when executed by an apparatus, cause the apparatus to perform at least the following: receiving, from a user equipment, an optimal pair comprising a channel state information feedback size threshold defining a maximum number of bits for channel state information feedback, and a channel state information reference signal pattern, wherein the optimal pair is optimal for the user equipment; based on the determined optimal pair and at least one of cell load information and cell performance information, assigning to the user equipment, a pair comprising a channel state information feedback size threshold defining a maximum number of bits for channel state information feedback and channel state information reference signal pattern; and transmitting, to the user equipment, information indicating the assigned pair.

According to a twenty-fifth aspect there is provided a non-transitory computer readable medium comprising program instructions stored thereon for performing at least the following: determining an optimal pair comprising a channel state information feedback size threshold defining a maximum number of bits for channel state information feedback, and a channel state information reference signal pattern, wherein the optimal pair is optimal for a user equipment; based on the determined optimal pair and at least one of cell load information and cell performance information, assigning to the user equipment, a pair comprising a channel state information feedback size threshold defining a maximum number of bits for channel state information feedback and channel state information reference signal pattern; and transmitting, to the user equipment, information indicating the assigned pair.

According to a twenty-sixth aspect there is provided a non-transitory computer readable medium comprising program instructions stored thereon for performing at least the following: receiving, from an access node, information indicating an assigned pair comprising a channel state information feedback size threshold defining a maximum number of bits for channel state information feedback, and a channel state information reference signal pattern; and determining channel state information feedback bits based on the assigned pair.

According to a twenty-seventh aspect there is provided a non-transitory computer readable medium comprising program instructions stored thereon for performing at least the following: determining an optimal pair comprising a channel state information feedback size threshold defining a maximum number of bits for channel state information feedback, and a channel state information reference signal pattern, wherein the optimal pair is optimal for a user equipment; transmitting, to an access node, information indicating the determined optimal pair; receiving, from the access node, information indicating an assigned pair comprising a channel state information feedback size threshold defining a maximum number of bits for channel state information feedback, and a channel state information reference signal pattern; and determining channel state information feedback bits based on the assigned pair.

According to a twenty-eighth aspect there is provided a non-transitory computer readable medium comprising program instructions stored thereon for performing at least the following: receiving, from a user equipment, an optimal pair comprising a channel state information feedback size threshold defining a maximum number of bits for channel state information feedback, and a channel state information reference signal pattern, wherein the optimal pair is optimal for the user equipment; based on the determined optimal pair and at least one of cell load information and cell performance information, assigning to the user equipment, a pair comprising a channel state information feedback size threshold defining a maximum number of bits for channel state information feedback and channel state information reference signal pattern; and transmitting, to the user equipment, information indicating the assigned pair.

According to a twenty-ninth aspect there is provided a computer readable medium comprising program instructions that, when executed by an apparatus, cause the apparatus to perform at least the following: determining an optimal pair comprising a channel state information feedback size threshold defining a maximum number of bits for channel state information feedback, and a channel state information reference signal pattern, wherein the optimal pair is optimal for a user equipment; based on the determined optimal pair and at least one of cell load information and cell performance information, assigning to the user equipment, a pair comprising a channel state information feedback size threshold defining a maximum number of bits for channel state information feedback and channel state information reference signal pattern; and transmitting, to the user equipment, information indicating the assigned pair.

According to a thirtieth aspect there is provided a computer readable medium comprising program instructions that, when executed by an apparatus, cause the apparatus to perform at least the following: receiving, from an access node, information indicating an assigned pair comprising a channel state information feedback size threshold defining a maximum number of bits for channel state information feedback, and a channel state information reference signal pattern; and determining channel state information feedback bits based on the assigned pair.

According to a thirty-first aspect there is provided a computer readable medium comprising program instructions that, when executed by an apparatus, cause the apparatus to perform at least the following: determining an optimal pair comprising a channel state information feedback size threshold defining a maximum number of bits for channel state information feedback, and a channel state information reference signal pattern, wherein the optimal pair is optimal for the apparatus; transmitting, to an access node, information indicating the determined optimal pair; receiving, from the access node, information indicating an assigned pair comprising a channel state information feedback size threshold defining a maximum number of bits for channel state information feedback, and a channel state information reference signal pattern; and determining channel state information feedback bits based on the assigned pair.

According to a thirty- second aspect there is provided a computer readable medium comprising program instructions that, when executed by an apparatus, cause the apparatus to perform at least the following: receiving, from a user equipment, an optimal pair comprising a channel state information feedback size threshold defining a maximum number of bits for channel state information feedback, and a channel state information reference signal pattern, wherein the optimal pair is optimal for the user equipment; based on the determined optimal pair and at least one of cell load information and cell performance information, assigning to the user equipment, a pair comprising a channel state information feedback size threshold defining a maximum number of bits for channel state information feedback and channel state information reference signal pattern; and transmitting, to the user equipment, information indicating the assigned pair.

According to a thirty-third aspect there is provided a computer readable medium comprising program instructions stored thereon for performing at least the following: determining an optimal pair comprising a channel state information feedback size threshold defining a maximum number of bits for channel state information feedback, and a channel state information reference signal pattern, wherein the optimal pair is optimal for a user equipment; based on the determined optimal pair and at least one of cell load information and cell performance information, assigning to the user equipment a pair comprising a channel state information feedback size threshold defining a maximum number of bits for channel state information feedback and channel state information reference signal pattern; and transmitting, to the user equipment, information indicating the assigned pair.

According to a thirty-fourth aspect there is provided a computer readable medium comprising program instructions stored thereon for performing at least the following: receiving, from an access node, information indicating an assigned pair comprising a channel state information feedback size threshold defining a maximum number of bits for channel state information feedback, and a channel state information reference signal pattern; and determining channel state information feedback bits based on the assigned pair.

According to a thirty-fifth aspect there is provided a computer readable medium comprising program instructions stored thereon for performing at least the following: determining an optimal pair comprising a channel state information feedback size threshold defining a maximum number of bits for channel state information feedback, and a channel state information reference signal pattern, wherein the optimal pair is optimal for a user equipment; transmitting, to an access node, information indicating the determined optimal pair; receiving, from the access node, information indicating an assigned pair comprising a channel state information feedback size threshold defining a maximum number of bits for channel state information feedback, and a channel state information reference signal pattern; and determining channel state information feedback bits based on the assigned pair.

According to a thirty-sixth aspect there is provided a computer readable medium comprising program instructions stored thereon for performing at least the following: receiving, from a user equipment, an optimal pair comprising a channel state information feedback size threshold defining a maximum number of bits for channel state information feedback, and a channel state information reference signal pattern, wherein the optimal pair is optimal for the user equipment; based on the determined optimal pair and at least one of cell load information and cell performance information, assigning to the user equipment, a pair comprising a channel state information feedback size threshold defining a maximum number of bits for channel state information feedback and channel state information reference signal pattern; and transmitting, to the user equipment, information indicating the assigned pair.

DESCRIPTION OF FIGURES

Embodiments will now be described, by way of example only, with reference to the accompanying Figures in which:

Figure 1 shows a representation of a network system according to some example embodiments;

Figure 2 is a signalling diagram according to an example embodiment.

Figure 3 is a signalling diagram according to an example embodiment.

Figure 4 is a signalling diagram according to an example embodiment.

Figure 5 is a signalling diagram according to an example embodiment.

Figure 6 shows a schematic representation of a control apparatus according to some example embodiments;

Figure 7 shows a schematic representation of an apparatus according to some example embodiments;

Figure 8 is a flow chart of a method according to an example embodiment;

Figure 9 is a flow chart of a method according to an example embodiment;

Figure 10 is a flow chart of a method according to an example embodiment;

Figure 11 is a flow chart of a method according to an example embodiment;

Figure 12 shows a schematic representation of a non-volatile memory medium storing instructions which when executed by a processor allow a processor to perform one or more of the steps of the methods of some embodiments.

DETAILED DESCRIPTION

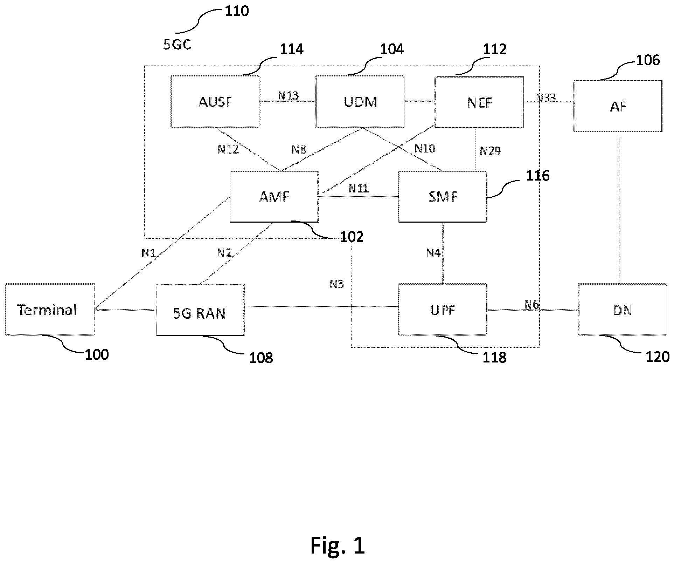

In the following, certain embodiments are explained with reference to mobile communication devices capable of communication via a wireless cellular system and mobile communication systems serving such mobile communication devices. Before explaining in detail the exemplifying embodiments, certain general principles of a wireless communication system, access systems thereof, and mobile communication devices are briefly explained with reference to Figure 1 to assist in understanding the technology underlying the described examples.

Figure 1 shows a schematic representation of a 5G system (5GS), which is provided by way of example of a communication system. The 5GS may comprise a terminal or user equipment (UE) 100, a 5G radio access network (5GRAN) 108 or next generation radio access network (NG-RAN), a 5G core network (5GC) 110, one or more application function (AF) 106 and one or more data networks.

The 5G-RAN may comprise one or more gNodeB (gNB) or one or more gNodeB (gNB) distributed unit functions connected to one or more gNodeB (gNB) centralized unit functions.

The 5GC may comprise the following entities: Network Slice Selection Function (NSSF); Network Exposure Function 112; Network Repository Function (NRF); Policy Control Function (PCF); Unified Data Management (UDM) 104; Application Function (AF) 106; Authentication Server Function (AUSF) 114; an Access and Mobility Management Function (AMF) 104; Session Management Function (SMF) 116; User Plane Function 118; and Data Network 120. Figure 1 also shows the various interfaces (N1, N2 etc.) that may be implemented between the various elements of the system.

It is noted that whilst some embodiments are described in relation to 5G networks, similar principles can be applied in relation to other networks and communication systems such as 5G-Advanced networks or 6G networks.

Type II CSI feedback overhead is a problem in networks and communication systems. CSI feedback compression and CSI overhead reduction is discussed in RAN1 MIMO session. In some examples, to achieve a good performance of Type II CSI feedback, hundreds of feedback bits may be sent, which uses up the uplink (UL) data bandwidth.

CSI feedback overhead reduction is included in 3GPP RAN1 AI/ML study item RP-213599 as a use case for performance, complexity, and potential specification impact. CSI feedback enhancement, e.g., overhead reduction, improved accuracy and prediction is described.

In some examples, to improve CSI feedback, feedback bits can be reduced while CSI feedback performance is kept the same or feedback bits can be kept the same while CSI feedback performance is improved. Both methods may improve the trade-off between CSI feedback overhead and CSI feedback performance. In some examples, CSI feedback performance can be measured as the channel recovery mean square error (MSE) at a gNB.

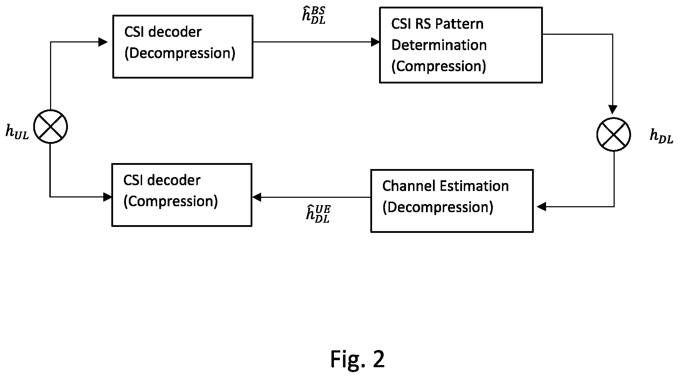

Fig. 2 shows a legacy CSI feedback procedure that is modelled in two steps. Information may pass between a UE and a BS in the legacy CSI feedback procedure. In some examples, information is passed between the BS and the UE via channels $h_{UL}$ and $h_{DL}$. The CSI feedback procedure enables DL reconstruction at the BS. The procedure includes a channel estimation module and a CSI encoder module to process information at the UE and a CSI decoder module and CSI-Pattern determination module to process information at the BS. Both modules are involved with high complexity computation. In some examples, reporting Type II CSI feedback requires high complexity computation. Reporting Type II CSI feedback may require calculating the Eigen Decomposition of the multiple antenna channel. Eigen Decomposition is known to be highly complex and resource consuming.

In addition to high complexity, the legacy two-step CSI feedback procedure may result in a loss of information in accordance with the data processing theorem, and as such CSI feedback performance may decrease. The data processing theorem states that data processing destroys information. At the UE, the channel estimation module may decompress a channel on a full Transmission Time Interval Physical Resource Block (TTI-PRB) resource grid with 12 x 14 resource elements (REs) from a channel on pilot REs. The channel on pilot REs may be based on a configured CSI-RS pattern. The channel on the full TTI-PRB resource grid may be recovered using interpolation. The recovered channel is shown in Fig. 2 by $\hat{h}_{DL}^{UE}$ (i.e., this represents the estimated DL channel at the UE). The CSI encoder module may compress the recovered channel on the full TTI-PRB resource grid into a CSI feedback container. The CSI encoder module uses Eigen Decomposition to compress the recovered channel on the full TTI-PRB resource grid and calculates Eigen vectors to simulate CSI feedback. For the legacy two-step CSI feedback procedure, the number of feedback bits may be implicitly configured with the number of feedback beams and corresponding co-phasing quantization bitwidth. At the BS, the CSI decoder module may decode information from the CSI encoder module resulting in a reconstructed DL channel, $\hat{h}_{DL}^{UE}$. However, this two-step decompression-compression procedure may result in a loss of information in comparison to a one-step go through procedure. For example, a one-step procedure may perform processing directly from the channel on pilot REs to the feedback bits.

Therefore, the legacy two-step CSI feedback procedure can be improved in view of both CSI feedback performance and computation complexity reduction. For example, CSI feedback performance may be improved by improving the channel recovery performance with a fixed number of feedback bits.

Embodiments herein provide a new CSI feedback procedure. In particular, a direct quantization CSI feedback procedure is provided. In some examples, the direct quantization CSI feedback procedure comprises direct quantization of the channel over RE pilots using a Convolutional Neural Network (CNN). In some examples, the direct quantization CSI feedback procedure comprises feedback of the output quantized feedback bits.

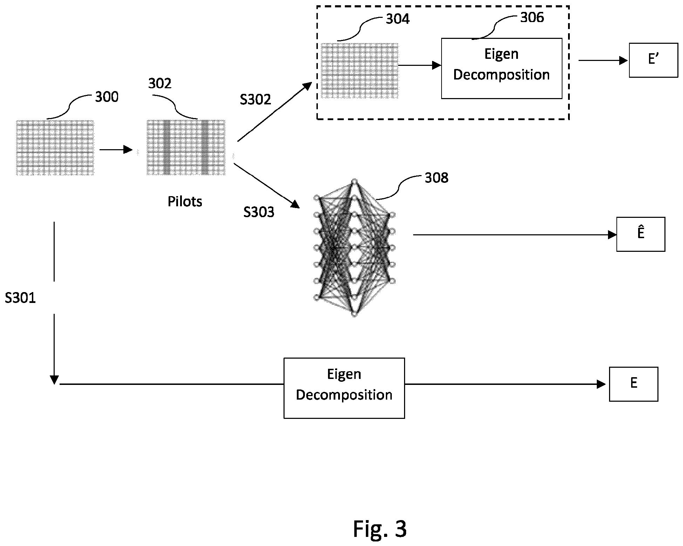

Fig. 3 represents one example comparison between CSI feedback procedures for the ground truth CSI feedback E, the legacy CSI feedback E' and the proposed direct quantization CSI feedback Ê. This example should be understood as an example showing how the direct quantization CSI feedback may compare against the ground truth CSI feedback and/or legacy CSI feedback procedures. Fig. 3 shows simplified steps for a ground truth CSI feedback procedure S301, a legacy two-step CSI feedback procedure S302 and a direct quantization CSI feedback procedure S303.

S301 shows a ground truth CSI feedback procedure. In this example, Eigen Decomposition is applied to the ground truth channel on a full TTI-PRB resource grid 300. Eigen Decomposition may be used to derive Eigen Vectors of channel 300. Eigen Vectors may be used as training and/or test labels for the ground truth CSI feedback E. In some examples, the ground truth CSI feedback E may be understood representing the channel if it would be measured optimally and without any errors or losses.

S302 shows the legacy two-step CSI feedback procedure. In some examples, legacy CSI feedback E' may be understood as representing CSI feedback obtained using the two-step CSI feedback procedure e.g., a Type II CSI feedback procedure. In this example, the ground truth channel on a full TTI-PRB resource grid 300 is sampled with pilot REs 302 based on a configured CSI-RS pattern. Channel 300 may be recovered using interpolation, resulting in a recovered channel 304. This may correspond to the decompressing steps performed by the channel estimation module, as described above. The recovered channel 304 is fed to the Eigen Decomposition module 306 and Eigen Vectors are calculated to simulate the CSI feedback bits E'. This may correspond to the compression steps performed by the CSI encoder module, as described above.

S303 shows a direct quantization CSI feedback procedure. In some examples, CSI feedback bits Ê may be understood as the CSI feedback bits obtained using the described methods and processes herein. For example, it may refer to direct quantization CSI feedback bits. Instead of two steps using channel estimation and eigen decomposition, the two steps are replaced by a CNN 308. In some examples, the CNN 308 is used to compute CSI feedback bits Ê. In some examples, the CNN 308 is used to quantize the channel over RE pilots 302 to produce CSI feedback bits Ê in one step. In some examples, the CNN 308 may behave similarly to a go through direct quantization function. In some examples, the channel over RE pilots 302 may be based on a configured CSI-RS pattern. In some examples, the number of CSI feedback bits Ê is based on a configured CSI feedback size threshold. In some examples, the CSI feedback size threshold defines a maximum number of bits for CSI feedback.

In some examples, the CNN 308 is tested and trained using the following model:

- Input = RE pilots
- Output = CSI feedback bits Ê
- Labels = CSI feedback bits E
- Loss = MSE between E and Ê

An example CNN implementation for the direct quantization CSI feedback procedure is shown below:

```
#Define the input placeholder as a tensor with shape input_shape.
Think of this as your input image
X_input = Input(input_shape)
X = Conv3D(2, 6, strides = (1, 1, 1), name='conv0', padding="same",
use_bias=True) (X_input) #(None, 12, 14, 8, 2)
X = Conv3D(2, (4, 7, 8), strides = (3, 7, 1), name='conv0',
padding="same", use_bias=True) (X_input) #(None, 4, 2, 8, 2)
X = Dense(2, activation='sigmoid', name='fc', use_bias=True) (X)
#(None, 4, 2, 8, 2)
nam = 'directEigenMapping'
*Create mode. This creates your Keras model instance, you'll use
this instance to train/test the mode.
model = Model(inputs=X_input, output=X, name=nam)
return model
```

In some examples, comparing the direct quantization CSI feedback procedure with the legacy two-step CSI feedback procedure uses the following model:

- Input = RE pilots
- Comparison = (MSE between E and Ê) vs. (MSE between E and E')

An example simulation MSE comparison between the direct quantization CSI feedback procedure and the legacy two-step CSI feedback procedure is shown below:

```
this is the end of the auxiliary and the MSE for legacy method could
be done here...
Epoch 1/10
408/408 [==========]- 16s 38ms/step - loss: 0.1212 - mse: 0.1212
Epoch 2/10
408/408 [==========]- 16s 39ms/step - loss: 0.0657 - mse: 0.0657
Epoch 3/10
408/408 [==========]- 16s 40ms/step - loss: 0.0625 - mse: 0.0624
Epoch 4/10
408/408 [==========]- 16s 39ms/step - loss: 0.0617 - mse: 0.0617
Epoch 5/10
408/408 [==========]- 16s 40ms/step - loss: 0.0613 - mse: 0.0613
Epoch 6/10
408/408 [==========]- 16s 39ms/step - loss: 0.0611 - mse: 0.0611
Epoch 7/10
408/408 [==========]- 16s 40ms/step - loss: 0.0610 - mse: 0.0610
Epoch 8/10
```

```
408/408 [==========]- 16s 38ms/step - loss: 0.0609 - mse: 0.0609
Epoch 9/10
408/408 [==========]- 16S 39ms/step - loss: 0.0608 - mse: 0.0608
Epoch 10/10
408/408 [==========]- 16s 39ms/step - loss: 0.0607 - mse: 0.0607
the mse of directQuantization method is 0.064899646
the time consumption of directQuantization method is 0.328125
the mse of legacy method is 0.11524421243078596
the time consumption of legacy method for eigen decomposition is
1.09375
```

From the above simulation comparison, it can be seen that the MSE for the direct quantization CSI feedback procedure (MSE = 0.064899646) is much lower than the legacy two-step step CSI feedback procedure (MSE = 0.11524421243078596). This result accords with the data processing theorem, wherein more processing leads to a larger loss of information. In some examples, once the CNN is trained the CNN may only require sequential add and multiply operations for inference of the results of the trained CNN. In comparison, the legacy two-step CSI procedure requires complex Eigen Decomposition, wherein iterative operations are involved. In some examples, the computation complexity of the direct quantization CSI feedback procedure in the inference stage is much lower than the Eigen Decomposition based legacy procedure. Therefore, in some examples, the direct quantization CSI feedback procedure lowers the complexity of CSI feedback computation.

To measure the time consumption of each CSI feedback procedure the python built-in function the CPU (Intel(R) Core(TM) i5-8350U CPU @ 1.70GHz) has been used. As shown in the above simulation comparison, the proposed direct quantization CSI feedback procedure takes much less time than the legacy two-step CSI feedback procedure. Further, only the time consumption for Eigen Decomposition in the legacy two-step CSI feedback procedure has been calculated in the above simulation (the time consumption for channel estimation has been neglected).

Key parameters for the data set generation is listed as below:

Channel: 408 subcarrier x 200 TTI for 8 x 1 channel

delayProfiles = {'CDL-A', 'CDL-B', 'CDL-C', 'CDL-D', 'CDL-E'};

channel.DelayProfile = string(delayProfiles(randi([1 numel(delayProfiles)])));

channel.DelaySpread = randi([1 300])*1e-9;

channel. Maximum DopplerShift = randi([5 400]);

In the above simulations, there are several simplifications of the CSI feedback procedure modelling. For example, the RE pilots are free from noise for the legacy two-step CSI feedback procedure and the proposed direct quantization CSI feedback procedure (for both training and testing). This simplification should mitigate the performance gap between the two procedures; however, it does not compromise the fairness of the comparison. In another example, the CSI encoder module in the legacy two-step CSI feedback procedure is modelled as Eigen Decomposition and the acquired Eigen Vectors are assumed to be the CSI feedback information. Based on previous simulations of the legacy two-step CSI feedback procedure and corresponding observations, the correct feedback Eigen beams contribute to over 80% of the DL MIMO performance. Therefore, using Eigen vectors should be sufficient in reflecting the performance gap. In another example, usually there is a quantization step for the Eigen vectors before they are signalled as the CSI feedback should be in "bits". However, this step has been omitted in the above models as each of the ground truth CSI feedback procedure, the legacy two-step CSI feedback procedure and the direct quantization CSI feedback procedure share the same quantization processing and thus the omission does not impact the results.

In the current standard, the CSI-RS pattern and the CSI feedback bitwidth are configured independently. In the legacy two-step CSI feedback procedure, the intermediate variable (i.e., the recovered channel) separates decompression (performed by the channel estimation module) and compression (performed by the CSI encoder module). For the direct quantization CSI feedback procedure, there is no intermediate variable to separate the two steps of decompression and compression. Instead, one-step go through processing is applied and the decompression and compression steps are correlated. In some examples, the CSI-RS pattern (i.e., the number of CSI-RS REs and their distribution in the TTI-PRB resource grid) and the CSI feedback size threshold (i.e., the maximum number of feedback bits for CSI feedback) may be determined and/or configured together. In some examples, the CSI feedback size threshold may be referred to as a CSI feedback container size.

In some examples, signalling updates may be required to perform direct quantization CSI feedback.

In some examples, a UE Capability Indication may be required. The UE may indicate, to the gNB during a RRC setup stage, whether the UE supports direct quantization CSI feedback. This may be indicated by a 1 bit indication: when "1" is indicated, the UE supports the new direct quantization CSI feedback procedure; when "0" is indicated, the UE supports the legacy CSI feedback procedure.

In some examples, CSI Feedback Configuration/Reconfiguration may be required. CSI Feedback Configuration/Reconfiguration may include at least one of: a CSI feedback procedure selection; a CSI feedback recovery method selection; CSI-RS pattern and CSI feedback size threshold configuration, defining a maximum number of feedback bits for CSI feedback.

In some examples, the gNB indicates, to the UE, which CSI feedback procedure has been selected. For example, when the UE indicates, to the gNB during the RRC setup stage, that it supports the direct quantization CSI feedback procedure, the gNB needs to indicate to the UE which CSI feedback procedure has been applied. For example, the gNB needs to indicate to the UE whether the legacy two-step CSI feedback procedure or the direct quantization CSI feedback procedure has been applied. In some examples, this can be indicated by a 1 bit indication: when "1" is indicated, the UE may apply the direct quantization CSI feedback procedure; when "0" is indicated, the UE may apply the legacy two-step CSI feedback procedure.

In some examples, the gNB indicates which CSI feedback recovery method has been selected, to the UE. For example, during the RRC setup procedure, the gNB may indicate to the UE how it recovers the CSI feedback bits and how it reconstructs the channel. In some examples, several predefined methods can be specified. The gNB may select one predefined method and indicate this to the UE. In some examples, this can be indicated by implementing a new field in a RRC message. In some examples, the default CSI feedback recovery method can be specified as the legacy two-step CSI feedback recovery method. In some examples, a new CSI feedback recovery method does not need to be defined. The legacy two-step CSI feedback recovery method works alongside the direct quantization CSI feedback procedure. In some examples, the direct quantization CSI feedback procedure is a machine learning (ML) based method and will adapt a CNN to any predefined recovery method through a training process. In some examples, simplified recovery methods may reduce computation complexity while maintaining the channel recovery performance.

In some examples, the gNB indicates to the UE a configured CSI-RS pattern and CSI feedback size threshold. In some examples, the CSI feedback size threshold is the maximum number of feedback bits for CSI feedback. In the legacy two-step CSI feedback procedure, the feedback bits number is implicitly configured with number of feedback beams and corresponding co-phasing quantization bitwidths. In comparison, for the direct quantization CSI feedback procedure, only one number of the total feedback bits may be configured. The gNB may indicate the CSI feedback size threshold (L) together with the CSI-RS pattern (P). In other words, the gNB may indicate a (L, P) pair to UE. The (L, P) pair may be determined based on the selected feedback recovery method and the expected channel recovery performance (MSE). In some examples, joint encoding of the CSI-RS pattern (P) and the CSI feedback size threshold (L) may be required. For example, for one CSI feedback recovery method, several (L, P) pairs may be defined by joint encoding to achieve different channel recovery MSE while saving the signalling overhead. In some examples, this may be achieved by using a table indexing the (L, P) pairs. For example, the gNB may indicate one of the indexes indicating a certain (L, P) pair to the UE. In some examples, a default configuration for a (L, P) pair may be calculated using the legacy two-step CSI feedback procedure with a maximum possible CSI feedback size threshold and a CSI-RS pattern with a largest possible number of pilot REs. In some examples, using the maximum possible CSI feedback size threshold and a CSI-RS pattern with a largest possible number of pilot REs may improve CSI feedback performance at the start of the direct quantization CSI feedback procedure.

In some examples, UE assisted direct quantization CSI feedback configuration may be required. For example, the UE may determine several optional (L,P) pairs and indicate an optimal(L, P) pair to the gNB based on the configured CSI feedback recovery method indicated to the UE during the gNB CSI feedback configuration/reconfiguration procedure, as described above. In some examples, once the CSI feedback recovery method is indicated to the UE during the RRC setup stage, the UE may train at least one CNN to derive the optimal CSI-RS pattern and CSI feedback size threshold pair which together may achieve a certain CSI recovery performance (MSE) that the UE expects to achieve (based on the CSI recovery method). In some examples, the UE may store the optimal (L, P) pair from any previous session. In some examples, the UE may store the configured feedback recovery method from any previous session. In some examples, during the RRC setup procedure, the UE may indicate the optimal (L, P) pair and the feedback recovery method from a previous session to assist the gNB in configuring the CSI feedback procedure.

In some examples, the gNB may derive an (L, P) pair using UL-DL reciprocity. For example, the UE may determine a channel on a full TTI PRB resource grid (i.e., training data) using data aided channel estimation. The gNB may acquire the training data by exploiting UL-DL channel reciprocity. UL-DL channel reciprocity enables the gNB to acquire the UL channel and determine that the DL channel is the same and/or similar to the UL channel . In some examples, if training data of the channel on a full TTI-PRB resource grid is available and the CSI feedback recovery method is known, both the UE and the gNB can derive the optimal (L, P) pair. Deriving the optimal (L, P) pair is described in more detail below.

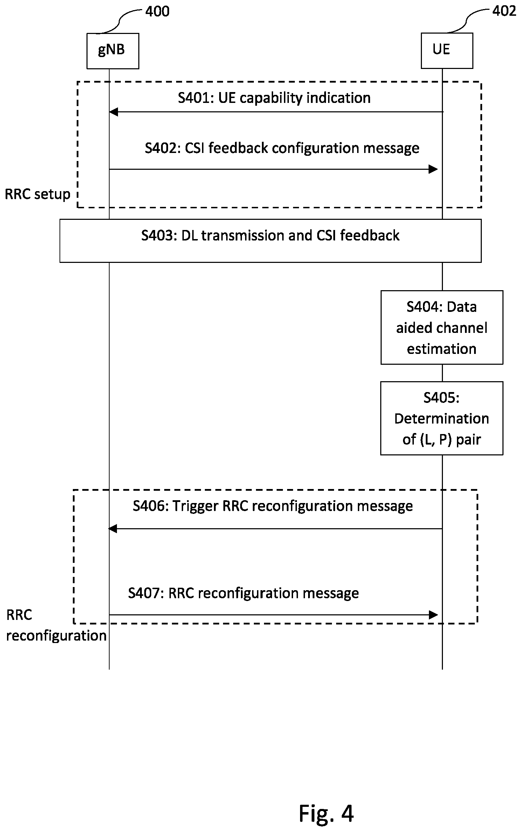

Fig. 4 shows an example signalling procedure for direct quantization CSI feedback. In this example, the UE derives an optimal (L, P). However, as described above, the gNB may also derive the optimal (L, P) pair.

In this example, at S401, a UE 402 transmits a capability indication to the gNB 400. In some examples, the capability indication is transmitted to the gNB 400 during a RRC setup stage. In some examples, the capability indication comprises an indication indicating whether the UE 402 supports direct quantization CSI feedback. In some examples, the capability indication comprises a suggested (L, P) pair from a previous session. In some examples, the capability indication comprises information of a configured CSI feedback recovery method from a previous session.

At S402, the gNB 400 transmits a CSI feedback configuration message to the UE 402. In some examples, the CSI feedback configuration message comprises an indication indicating whether the gNB 400 has selected a direct quantization CSI feedback procedure. In some examples, the CSI feedback configuration message comprises information of a selected CSI feedback recovery method. For example, the gNB 400 may select a legacy two-step CSI feedback recovery method. In some examples, information of the selected CSI feedback recovery method indicates how the gNB 400 will recover the CSI feedback bits and/or how the gNB 400 will reconstruct the channel. In some examples, the CSI feedback configuration message comprises an (L, P) pair. For example, the gNB 400 determines an (L, P) pair to send to the UE 402 after considering other UEs in the same cell. In some examples, the gNB 400 determines an (L, P) pair to transmit to the UE 402 after considering cell load and cell performance. For example, the gNB 400 may transmit an (L, P) pair to the UE 402 that may increase the performance of the cell.

At S403, the gNB 400 and UE 402 perform DL transmission and CSI feedback.

At S404, the UE 402 performs data aided channel estimation to determine a channel on a full TTI-PRB resource grid. In some examples, the channel on a full TTI-PRB resource grid may be training data. Data aided channel estimation is described in more detail below.

At S405, the UE 402 derives an optimal (L, P) pair. In some examples, the UE 402 trains at least one CNN to derive the optimal (L, P) pair. In some examples, the UE 402 determines CNN network parameters. For example, CNN network parameters may include input pilot REs (that are inputted into the CNN) and output CSI feedback bits (that is outputted by the CNN). Deriving the optimal (L, P) pair is described in further detail below.

At S406, the UE 402 transmits a trigger RRC reconfiguration message to the gNB 400. In some examples, the trigger RRC reconfiguration message comprises the derived optimal (L, P) pair. In some examples, the trigger RRC reconfiguration message comprises CSI feedback according to the derived optimal (L, P) pair.

At S407, the gNB 400 transmits a CSI feedback reconfiguration message to the UE 402. In some examples, the CSI feedback reconfiguration message is a reconfiguration message for direct quantization feedback. In some examples, the CSI feedback reconfiguration message comprises information of a selected CSI feedback recovery method. For example, the gNB 400 may select a legacy two-step CSI feedback recovery method. In some examples, information of the selected CSI feedback recovery method indicates how the gNB 400 will recover the CSI feedback bits and/or how the gNB 400 will reconstruct the channel. In some examples, the CSI feedback reconfiguration message comprises an (L, P) pair. For example, after the gNB 400 receives the optimal (L, P) pair from the UE 420, the gNB 400 may use the optimal (L, P) pair to determine a (L, P) pair that is to be used by the UE 420 to determine CSI feedback bits. In some examples, the gNB 400 will assign an (L, P) pair that increases the performance of the whole cell. In some examples, the gNB 400 assigns an (L, P) pair to the UE 402 based on at least one of: the received optimal (L, P) pair; cell load information; and cell performance information. In some examples, the optimal (L, P) pair determined by the UE 402, is optimal for the UE 402. In some examples, the UE 420 will determine CSI feedback bits using the (L, P) pair indicated by the gNB 400 and transmit the CSI feedback bits to the gNB 400. In some examples, the UE 402 may transmit the CSI feedback bits to the gNB 400 according to the CSI feedback threshold size associated with the assigned (L, P) pair received from the gNB 400.

As described at S404 above, the UE performs data aided channel estimation to determine a ground truth channel on a full TTI-PRB resource grid. In some examples, the channel on a full TTI-PRB resource grid may be training data. In some examples, data aided channel estimation may improve channel estimation performance. In some examples, data aided channel estimation may comprise decoding a transmission block. In some examples, when the transmission block is successfully decoded, the decoded data REs can be seen as pilot REs. Using the decoded data REs and the reference signal REs, a channel frequency response may be acquired for the whole transmission block, resulting in the channel on the full TTI-PRB resource grid.

As described at S405 above, the UE may determine an optimal (L, P) pair. In some examples, the optimal (L, P) pair may be communicated between the gNB and UE. In some examples, determining an optimal (L, P) pair and transmitting this to the gNB assists with gNB scheduling. In some examples, the gNB may derive the optimal (L, P) pair. In some examples, determining the optimal (L, P) pair assists with the gNB scheduling design.

In some examples, the UE may determine (L, P) pairs based on data aided channel estimation performed by the UE. In some examples, the gNB may determine (L, P) pairs using UL-DL channel reciprocity. In some examples, ML model training may be used to determine (L, P) pairs. In some examples, the UE may determine an optimal (L, P) pair based on data aided channel estimation performed by the UE. In some examples, the gNB may determine an optimal (L, P) pair based on UL-DL channel reciprocity. For example, ML model training may include determining the ground truth channel on a full TTI-PRB resource grid based on data aided channel estimation and selecting an optimal (L, P) pair by comparing the channel recovery MSE of a plurality of (L, P) pairs. In some examples, the gNB acquires the ground truth channel on a full TTI-PRB resource grid by exploiting UL-DL channel reciprocity. In some examples, the channel recovery MSE for a (L, P) pair may be obtained by comparing the channel estimation, obtained using said (L, P) pair, with the ground truth channel on a full TTI-PRB resource grid. In some examples, the result of a measured ground truth channel on a full resource grid may be used as a training data for the ML model to determine the optimal (L, P) pair. In some examples, the UE and/or the gNB may determine, utilizing the ML model for the CSI feedback acquisition and the training data, a plurality of CSI feedbacks, wherein each of the determined plurality of CSI feedbacks is associated with a corresponding (L, P) pair.

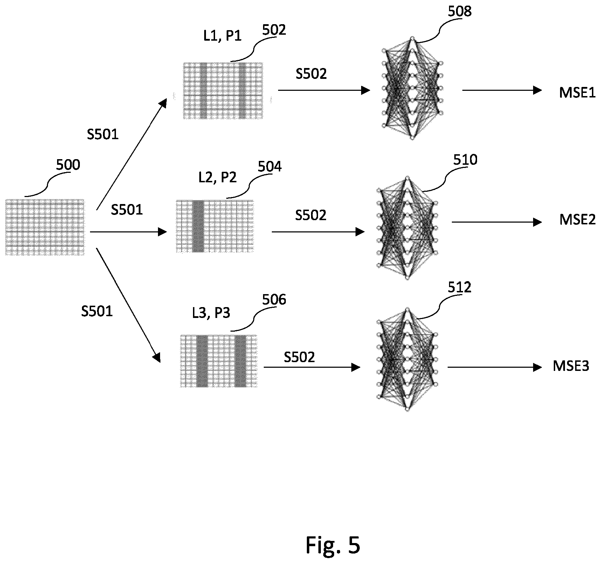

Fig. 5 shows the determination of an optimal (L, P) pair using data aided channel estimation and ML model training. In some examples, the optimal (L, P) pair is determined by a UE. In some examples, the optimal (L, P) pair is determined by a gNB. In some examples, the optimal (L, P) pair is optimal for the UE.

In Fig.5, a ground truth measured channel grid, 500, may be understood as training data. In some examples, training data is determined at the UE using data aided channel estimation. In some examples, training data is obtained by the gNB using UL-DL channel reciprocity. In some examples, the ground truth channel may be measured over a full channel grid. In some examples, the ground truth channel may be measured over resources. For example, the ground truth channel may be measured over REs. In some examples, the resources may include CSI-RS(s) indicated by a CSI-RS pattern and some further resources (such as, for example, UL Sounding Reference Signals). In some examples, the UL SRS resource may be used when the training data is obtained by the gNB using UL-DL channel reciprocity. In some examples, when the ground truth channel is measured over resources, not all the resources of the channel may be measured. In some examples, a plurality of (L, P) pairs may be determined at the UE and/or gNB based on estimation or measurement of radio channel characteristics. In some examples, the radio channel may refer to a channel that is used for transmitting the CSI-RSs according to the CSI-RS pattern. For example, for a certain CSI-RS pattern with certain channel characteristics (or radio conditions), a certain number of CSI feedback bits may be needed. In some examples, the CSI feedback size threshold may be determined so that said certain number of CSI feedback bits may fit according to the CSI feedback size threshold used to transmit CSI feedback. In some examples, a plurality of (L, P) pairs may be determined using a default (L, P) pair. In some examples, the gNB may transmit a default (L, P) pair to the UE. In some examples, the default (L, P) pair is a default legacy two-step CSI feedback (L, P) pair. In some examples, a plurality of (L, P) pairs may be determined by following a default (L, P) pair and using data aided channel estimation. In some examples, the gNB selects and/or determines a CSI feedback recovery method. For example, the gNB may select a legacy two-step CSI feedback recovery method. In some examples, information of the selected CSI feedback recovery method indicates how the gNB will recover CSI feedback bits and/or how the gNB will reconstruct a channel. In some examples, the gNB transmits information of the feedback recovery method to the UE. In some examples, the gNB may transmit information of the feedback recovery method to the UE when the UE determines the optimal (L, P) pair.

At S501, the UE and/or gNB may use multiple different CSI-RS patterns (e.g., P1, P2, P3) to obtain different patterns (e.g., 502, 504, 506) from the measured ground truth channel grid 500. For example, as the ground truth channel grid 500 has been measured, different REs of the measured channel grid 500 may be obtained. In some examples, each CSI-RS pattern may be associated with a corresponding CSI feedback size threshold (e.g., L1, L2, L3). The CSI feedback size threshold and CSI-RS pattern may form a pair (e.g., L1, P1; L2, P2; L3, P3).

At S502, the UE and/or gNB may train a ML model 508, 510, 512 using the training data. For example, the UE and/or gNB may input the resources obtained based on the patterns 502, 504, 506 associated with the plurality of (L, P) pairs into a ML model 508, 510, 512. In some examples, CSI feedback may be obtained as an output. In some examples, the ML model 508, 510, 512 may be a CNN. In some examples, the ML model 508, 510, 512 may be any neural network.In some examples, the CSI feedback obtained using the measured channel (i.e., the measured resources) based on the different patterns 502, 504, 506 associated with each of the plurality of (L, P) pairs may vary. In some examples, each CSI feedback associated with each (L, P) pair may be compared with the CSI feedback associated with the measured ground truth channel grid 500. In some examples, each of the plurality of (L, P) pairs associated with each pattern 502, 504, 506 may provide different channel recovery MSEs. For example, as shown in Figure 5, (L1, P1) -pair may be associated with MSE1, (L2, P2) -pair may be associated with MSE2, and (L3, P3) -pair may be associated with MSE3. In some examples, each of the plurality of (L, P) pairs associated with each pattern 502, 504, 506 may provide a different overhead. In some examples, the MSE and overhead associated with each of the plurality of (L, P) pairs is determined by the ML model 508. In some examples, an optimal (L, P) pair is selected from among the plurality of (L, P) pairs. In some examples, an optimal (L, P) pair is selected based on at least one of: MSE associated with each (L, P) pair; and overhead associated with each (L, P) pair. For example, the (L, P) pair that is associated with the lowest MSE is selected. In some examples, the (L, P) pair associated with a MSE that meets a MSE requirement of the feedback recovery method is selected. In some examples, a (L, P) pair associated with a MSE that meets a MSE requirement of the feedback recovery procedure and produces the least overhead is selected. In some examples, the least overhead includes at least one of: the least CSI feedback overhead; the least CSI-RS REs overhead. In some examples, there are additional sources of overhead associated with each (L, P) pair. In some examples, the (L, P) pair associated with the least overhead is selected. In some examples, the (L, P) pair associated with an optimum trade-off between MSE and overhead is selected.

In some examples, the optimal (L, P) pair may be determined using a trial and selection method. For example, after the gNB has determined and/or selected a CSI feedback recovery method, the gNB may determine a plurality of (L, P) pairs. In some examples, after information of the CSI feedback recovery method has been signalled to the UE from the gNB, the UE may determine a plurality of (L, P) pairs. In some examples, a plurality of (L, P) pairs may be determined, by the gNB and/or UE, based on estimation or measurement of radio channel characteristics. In some examples, a plurality of (L, P) pairs may be determined using a default (L, P) pair. In some examples, the gNB may transmit a default (L, P) pair to the UE. In some examples, the default (L, P) pair is a default legacy two-step CSI feedback (L, P) pair. In some examples, a plurality of (L, P) pairs may be determined by following a default (L, P) pair and using data aided channel estimation.

In some examples, the UE and/or gNB constructs a ML model for each of the plurality of (L, P) pairs. In some examples, the ML model may be a neural network (NN). In some examples, the ML model may be a CNN. In some examples, each ML model is trained and tested. In some examples, training and testing of each ML model may be performed in parallel. In some examples, each ML model is trained and tested using the data obtained from data aided channel estimation. In some examples, training data is determined at the UE using data aided channel estimation. In some examples, training data is obtained by the gNB using UL-DL reciprocity. For example, CSI-RS patterns associated with the plurality of (L, P) pairs may be used to obtain different patterns from the measured ground truth channel grid. In some examples, resources based on the different patterns associated with each (L, P) pair may be inputted into each respective constructed ML model. Each ML model constructed for each (L, P) pair may output a CSI feedback. In some examples, each ML model constructed for each (L, P) pair may determine an estimated channel recovery MSE of the feedback recovery method associated with each (L, P) pair. For example, the ML model may compare each outputted CSI feedback with the CSI feedback associated with the ground truth channel grid to determine an estimated channel recovery MSE associated with each (L, P) pair. In some examples, each ML model determines an estimated overhead associated with each (L, P) pair. In some examples, the gNB and/or UE determines and/or selects an optimal (L, P) pair from among each of the plurality of (L, P) pairs. In some examples, the optimal pair is optimal for the UE. In some examples, the optimal (L, P) pair is selected based on at least one of: the channel recovery MSE associated with each (L, P) pair; and the overhead associated with each (L, P) pair. For example, a (L, P) pair that is associated with the lowest MSE is selected. In some examples, the (L, P) pair associated with a MSE that meets a MSE requirement of the feedback recovery method is selected. In some examples, a (L, P) pair associated with a MSE that meets a MSE requirement of the feedback recovery procedure and produces the least overhead is selected. In some examples, the least overhead includes at least one of: the least CSI feedback overhead; the least CSI-RS REs overhead. In some examples, there are additional sources of overhead associated with each (L, P) pair. In some examples, the (L, P) pair associated with the least overhead is selected. In some examples, the (L, P) pair associated with an optimum trade-off between MSE and overhead is selected.

In some examples, when the UE determines the optimal (L, P) pair, the UE may transmit the selected (L, P) pair to the gNB. In some examples, the UE may transmit the optimal (L, P) pair to the gNB via RRC signalling. In some examples, the UE may transmit the selected (L, P) pair to the gNB via a RRC reconfiguration message. In some examples, the gNB assigns a (L, P) pair to the UE, based on at least one of: the received optimal (L, P) pair; cell load information; and cell performance. In some examples, the gNB transmits the assigned pair to the UE. In some examples, the assigned pair may be the determined optimal (L, P) pair. In some examples, the UE determines and/or computes CSI feedback bits based on the assigned pair. In some examples, the UE determines CSI feedback bits using at least one ML model. In some examples, the ML model may be a NN. In some examples, the ML model may be a CNN. For example, the ML model is used to quantize a channel over RE pilots to produce CSI feedback bits. In some examples, the channel over RE pilots may be based on the CSI-RS pattern (P) associated with the assigned (L, P) pair indicated by the gNB. In some examples, the number of CSI feedback bits is based on the CSI feedback size threshold (L) associated with the assigned (L, P) pair indicated by the gNB. In some examples, the UE may transmit the determined CSI feedback bits to the gNB. In some examples, the UE may transmit CSI feedback bits to the gNB according to the CSI feedback size threshold associated with the assigned (L, P) pair indicated by the gNB.

In some examples, when the gNB determines the optimal (L, P) pair, the gNB assigns an (L, P) pair based on at least one of: the determined optimal (L, P) pair; cell load; and cell performance. In some examples, the gNB transmits the assigned pair to the UE. In some examples, the assigned pair may be the determined optimal (L, P) pair. In some examples, the UE determines CSI feedback bits based on the assigned pair. In some examples, the UE determines and/or computes CSI feedback bits using at least one ML model. In some examples, the UE determines CSI feedback bits using at least one ML model. In some examples, the ML model may be a NN. In some examples, the ML model may be a CNN. For example, the ML model is used to quantize a channel over RE pilots to produce CSI feedback bits. In some examples, the channel over RE pilots may be based on the CSI-RS pattern (P) associated with the assigned (L, P) pair indicated by the gNB. In some examples, the number of CSI feedback bits is based on the CSI feedback size threshold (L) associated with the assigned (L, P) pair indicated by the gNB. In some examples, the UE may transmit the determined CSI feedback bits to the gNB. In some examples, the UE may transmit CSI feedback bits to the gNB according to the CSI feedback size threshold associated with the assigned (L, P) pair indicated by the gNB.

Transmitting the assigned pair to the UE may be beneficial as both the UE and gNB can be aware of the (L, P) pair that is to be used for determining CSI feedback bits during the direct quantization CSI feedback procedure. In some examples, if the optimal (L, P) pair is determined at the gNB, the UE may not indicate an optimal (L, P) pair to the gNB.

In some examples, using a ML mode (for example a NN or CNN)for direct quantization CSI feedback may be simple and may have only a few layers, so the training and testing of the NN and/or CNN can be done quickly. In some examples, the trial and selection method can be applied if CSI feedback recovery methods other than the legacy two-step feedback CSI recovery method are defined and configured. For example, any CSI feedback recovery method may work in the trial and selection method. In some examples, the CSI feedback recovery method is predefined and communicated between the gNB and UE. The determination of the optimal (L, P) pair can be performed at the UE and the gNB. For example, if channel data (i.e., training data) is determined (for example, by data aided channel estimation), the NN and/or CNN can be trained.

In other examples, the optimal (L, P) pair can be determined using a meta-learning method. For example, by meta-learning, a separate ML model may be built on top of a constructed NN and/or CNN. In some examples, the ML model may exploit reinforcement learning to learn the structure of the NN and/or CNN. For example, the ML model may learn at least one of: the input layer structure of the NN and/or CNN (i.e., the CSI-RS pattern); the output layer structure of the NN and/or CNN (i.e., the CSI feedback size threshold); and any intermediate layers of the NN and/or CNN. In some examples, the ML model may learn the structure of the NN and/or CNN with fixed internal layer types but flexible dimensions for the layers (e.g., the number of the neurons in a layer, which can be mapped to the CSI-RS pattern or the feedback size threshold). In some examples, the learned structure of the NN and/or CNN infers MSE and/or overhead associated with the input layer and output layer.

The proposed direct quantization CSI feedback procedure comprises advantages over other CSI feedback procedures (e.g., the legacy two-step CSI feedback procedure or the ground-truth CSI feedback procedure). The direct quantization CSI feedback procedure may provide a better CSI feedback performance with less MSE of the channel recovery at the gNB and/or less overhead, including both CSI-RS overhead and CSI feedback overhead. The direct quantization CSI feedback procedure requires less time and/or less power consumption. Additionally, the direct quantization CSI feedback procedure reduces implementation complexity.

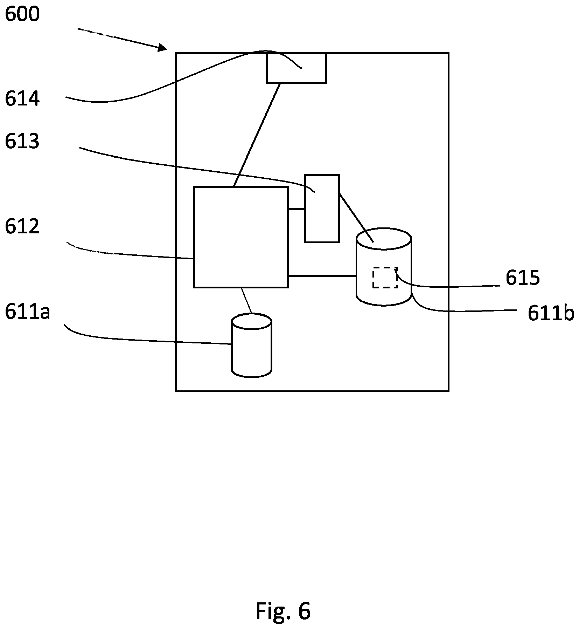

Figure 6 illustrates an example of a control apparatus 600 for controlling a function of the 5GRAN or the 5GC as illustrated on Figure 1. The control apparatus may comprise at least one random access memory (RAM) 611a, at least on read only memory (ROM) 611b, at least one processor 612, 613 and an input/output interface 614. The at least one processor 612, 613 may be coupled to the RAM 611a and the ROM 611b. The at least one processor 612, 613 may be configured to execute an appropriate software code 615. The software code 615 may for example allow to perform one or more steps to perform one or more of the present aspects. The software code 615 may be stored in the ROM 611b. The control apparatus 600 may be interconnected with another control apparatus 600 controlling another function of the 5GRAN or the 5GC. In some embodiments, each function of the 5GRAN or the 5GC comprises a control apparatus 600. In alternative embodiments, two or more functions of the 5GRAN or the 5GC may share a control apparatus.

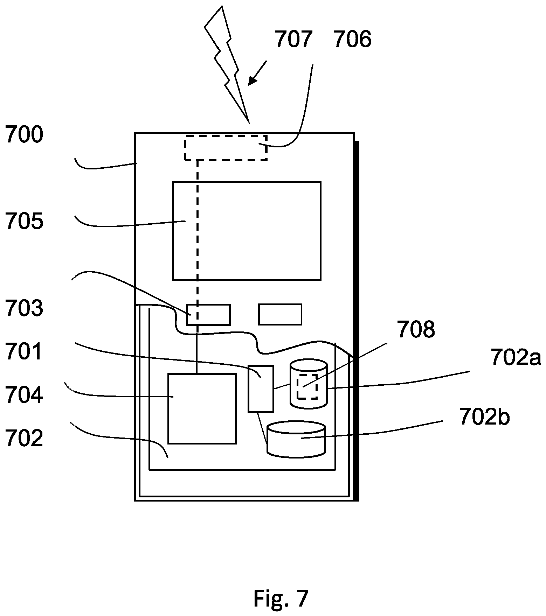

Figure 7 illustrates an example of a terminal 700, such as the terminal illustrated on Figure 1. The terminal 700 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, an Internet of things (IoT) type communication device or any combinations of these or the like. The terminal 700 may provide, for example, communication of data for carrying communications. The communications may be one or more of voice, electronic mail (email), text message, multimedia, data, machine data and so on.

The terminal 700 may be provided with at least one processor 701, at least one memory ROM 702a, at least one RAM 702b and other possible components 703 for use in software and hardware aided execution of tasks it is designed to perform, including control of access to and communications with access systems and other communication devices. The at least one processor 701 is coupled to the RAM 702b and the ROM 702a. The at least one processor 701 may be configured to execute an appropriate software code 708. The software code 708 may for example allow to perform one or more of the present aspects. The software code 708 may be stored in the ROM 702a.

The processor, storage and other relevant control apparatus can be provided on an appropriate circuit board and/or in chipsets. This feature is denoted by reference 704. The device may optionally have a user interface such as key pad 705, touch sensitive screen or pad, combinations thereof or the like. Optionally one or more of a display, a speaker and a microphone may be provided depending on the type of the device.

The terminal 700 may receive signals over an air or radio interface 707 via appropriate apparatus for receiving and may transmit signals via appropriate apparatus for transmitting radio signals. In Figure 7 transceiver apparatus is designated schematically by block 706. The transceiver apparatus 706 may be provided for example by means of a radio part and associated antenna arrangement. The antenna arrangement may be arranged internally or externally to the mobile device.

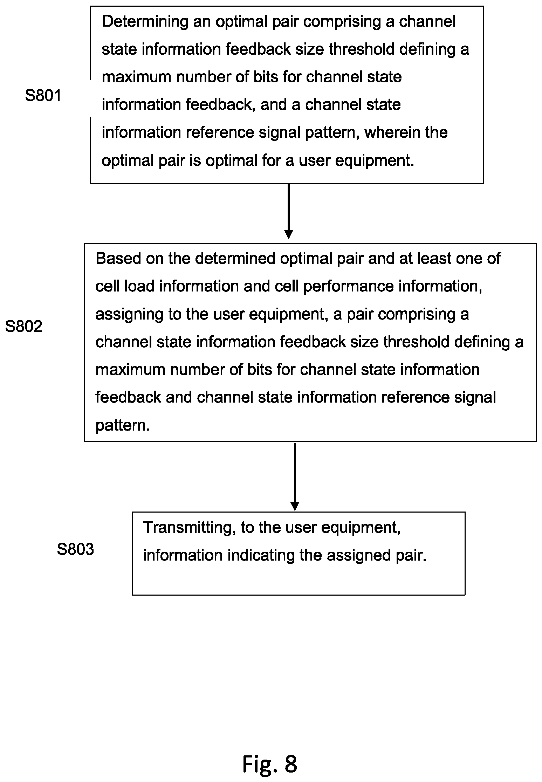

Figure 8 is a flow chart of a method according to an example. The flow chart of Figure 8 is viewed from the perspective of an apparatus. For example, the apparatus may comprise an access node.

As shown at S801, the method comprises determining an optimal pair comprising a channel state information feedback size threshold defining a maximum number of bits for channel state information feedback, and a channel state information reference signal pattern, wherein the optimal pair is optimal for a user equipment.

As shown at S802, the method comprises, based on the determined optimal pair and at least one of cell load information and cell performance information, assigning to the user equipment, a pair comprising a channel state information feedback size threshold defining a maximum number of bits for channel state information feedback and channel state information reference signal pattern.

As shown at S803, the method comprises transmitting, to the user equipment, information indicating the assigned pair.

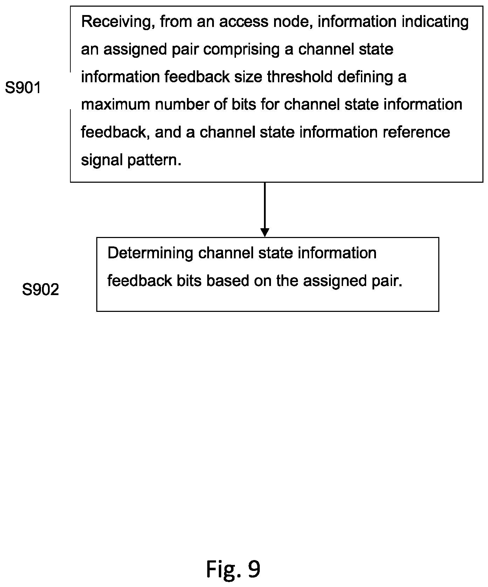

Figure 9 is a flow chart of a method according to an example. The flow chart of Figure 8 is viewed from the perspective of an apparatus. For example, the apparatus may comprise a user equipment.

As shown at S901, the method comprises receiving, from an access node, information indicating an assigned pair comprising a channel state information feedback size threshold defining a maximum number of bits for channel state information feedback, and a channel state information reference signal pattern.

As shown at S902, the method comprises determining channel state information feedback bits based on the assigned pair.

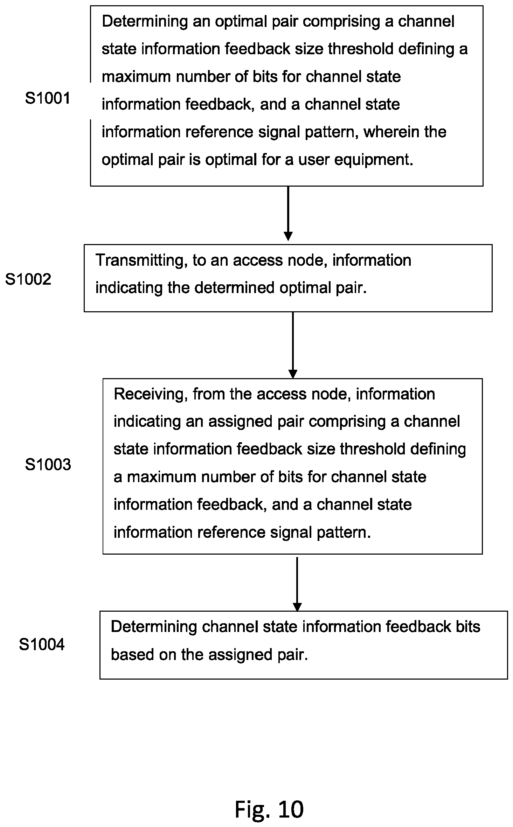

Figure 10 is a flow chart of a method according to an example. The flow chart of Figure 8 is viewed from the perspective of an apparatus. For example, the apparatus may comprise a user equipment.

As shown at S1001, the method comprises determining an optimal pair comprising a channel state information feedback size threshold defining a maximum number of bits for channel state information feedback, and a channel state information reference signal pattern, wherein the optimal pair is optimal for a user equipment.

As shown at S1002, the method comprises transmitting, to an access node, information indicating the determined optimal pair.

As shown at S1003, the method comprises receiving, from the access node, information indicating an assigned pair comprising a channel state information feedback size threshold defining a maximum number of bits for channel state information feedback, and a channel state information reference signal pattern.

As shown at S1004, the method comprises determining channel state information feedback bits based on the assigned pair.

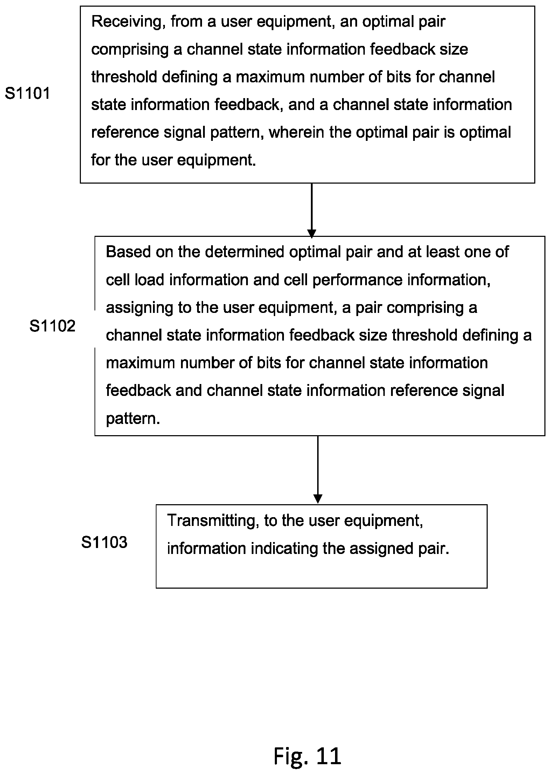

Figure 11 is a flow chart of a method according to an example. The flow chart of Figure 8 is viewed from the perspective of an apparatus. For example, the apparatus may comprise an access node.

As shown at S1101, the method comprises receiving, from a user equipment, an optimal pair comprising a channel state information feedback size threshold defining a maximum number of bits for channel state information feedback, and a channel state information reference signal pattern, wherein the optimal pair is optimal for the user equipment.

As shown at S1102, the method comprises, based on the determined optimal pair and at least one of cell load information and cell performance information, assigning to the user equipment, a pair comprising a channel state information feedback size threshold defining a maximum number of bits for channel state information feedback and channel state information reference signal pattern.

As shown at S1103, the method comprises transmitting, to the user equipment, information indicating the assigned pair.

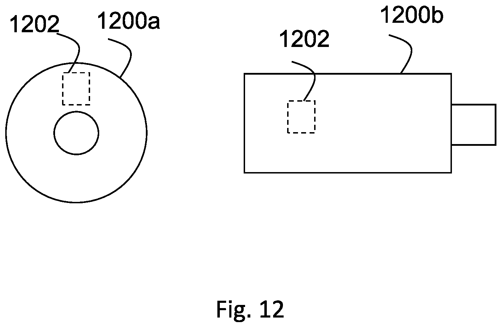

Figure 12 shows a schematic representation of non-volatile memory media 1200a (e.g. computer disc (CD) or digital versatile disc (DVD)) and 1200b (e.g. universal serial bus (USB) memory stick) storing instructions and/or parameters 1202 which when executed by a processor allow the processor to perform one or more of the steps of the method of Figures 8, 9, 10 or 11.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:

(a) hardware-only circuit implementations (such as implementations in only analog and/or digital circuitry) and

(b) combinations of hardware circuits and software, such as (as applicable):

(i) a combination of analog and/or digital hardware circuit(s) with software/firmware and

(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The term "non-transitory," as used herein, is a limitation of the medium itself (i.e., tangible, not a signal) as opposed to a limitation on data storage persistency (e.g., RAM vs. ROM).

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various embodiments of the disclosure is set out by the independent claims. The embodiments and features, if any, described in this specification that do not fall under the scope of the independent claims are to be interpreted as examples useful for understanding various embodiments of the disclosure.

The foregoing description has provided by way of non-limiting examples a full and informative description of the exemplary embodiment of this disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of this invention as defined in the appended claims. Indeed, there is a further embodiment comprising a combination of one or more embodiments with any of the other embodiments previously discussed.

**Claims**

1. An apparatus for channel state information feedback in a cellular communication network, the apparatus comprising:

   means for determining an optimal pair comprising a channel state information feedback size threshold defining a maximum number of bits for channel state information feedback, and a channel state information reference signal pattern, wherein the optimal pair is optimal for a user equipment;
   means for assigning to the user equipment, based on the determined optimal pair and at least one of cell load information and cell performance information, a pair comprising a channel state information feedback size threshold defining a maximum number of bits for channel state information feedback and channel state information reference signal pattern; and
   means for transmitting, to the user equipment, information indicating the assigned pair.

2. The apparatus of claim 1, further comprising means for:
   receiving, from the user equipment, channel state information feedback bits based on the assigned pair.

3. An apparatus for channel state information feedback in a cellular communication network, the apparatus comprising:

   means for receiving, from an access node, information indicating an assigned pair comprising a channel state information feedback size threshold defining a maximum number of bits for channel state information feedback, and a channel state information reference signal pattern; and
   means for determining channel state information feedback bits based on the assigned pair.

4. The apparatus of claim 3, further comprising means for determining the channel state information feedback bits using at least one neural network.

5. The apparatus of claim 3 or claim 4, further comprising means for transmitting, to the access node, the determined channel state information feedback bits.

6. An apparatus for channel state information feedback in a cellular communication network, the apparatus comprising:

   means for determining an optimal pair comprising a channel state information feedback size threshold defining a maximum number of bits for channel state information feedback, and a channel state information reference signal pattern, wherein the optimal pair is optimal for the apparatus;
   means for transmitting, to an access node, information indicating the determined optimal pair;
   means for receiving, from the access node, information indicating an assigned pair comprising a channel state information feedback size threshold defining a maximum number of bits for channel state information feedback, and a channel state information reference signal pattern; and
   means for determining channel state information feedback bits based on the assigned pair.

7. An apparatus for channel state information feedback in a cellular communication network, the apparatus comprising:

   means for receiving, from a user equipment, an optimal pair comprising a channel state information feedback size threshold defining a maximum number of bits for channel state information feedback, and a channel state information reference signal pattern, wherein the optimal pair is optimal for the user equipment;
   means for assigning to the user equipment, based on the determined optimal pair and at least one of cell load information and cell performance information a pair comprising a channel state information feedback size threshold defining a maximum number of bits for channel state information feedback and channel state information reference signal pattern; and
   means for transmitting, to the user equipment, information indicating the assigned pair.

8. The apparatus of claim 7, further comprising means for receiving, from the user equipment, channel state information feedback bits, based on the assigned pair.

9. The apparatus of any of claims 1-2 or claim 6, wherein determining the optimal pair comprises:

determining a plurality of pairs comprising a channel state information reference signal pattern and channel state information feedback size threshold based on an estimation or measurement of radio channel characteristics; and
selecting the optimal pair from among the determined plurality of pairs.

10. The apparatus of claim 9, wherein the means for determining the optimal pair comprises:

determining an estimated channel recovery mean square error of a feedback recovery method associated with each of the plurality pairs;
determining an estimated overhead associated with each of the plurality pairs; and
selecting the optimal pair from among the plurality of pairs based on at least one of: the determined channel recovery mean square error; and the determined overhead.

11. The apparatus of claim 10, wherein the overhead associated with each of the plurality pairs comprises at least one of: a channel state information feedback overhead; and a channel state information reference signal pilot resource elements overhead.

12. The apparatus of claim 10 or claim 11, further comprising means for determining the estimated channel recovery mean square error and overhead associated with each of the plurality pairs using at least one neural network.

13. The apparatus of claim 12, when dependent on claim 1 or 2, further comprising means for training and testing the at least one neural network using a channel, wherein the channel is obtained by the apparatus using uplink-downlink reciprocity.

14. The apparatus of any of claims 10 to 12, further comprising means for constructing a plurality of neural networks, wherein each neural network of the plurality of neural networks is used to determine the estimated channel recovery mean square error and estimated overhead associated with one of the plurality pairs.

15. The apparatus of any of claims 12 to 14, further comprising means for building a separate machine learning model on top of the at least one neural network, wherein the machine learning model learns the structure of the at least one neural network.

Fig. 1

Fig. 2

Fig. 3

```
                    ┌─400                              ┌─402
                 ┌──────┐                          ┌──────┐
                 │ gNB  │                          │  UE  │
                 └──────┘                          └──────┘
        ┌ ─ ─ ─ ─ ─│─ ─ ─ ─ ─ ─ ─ ─ ─ ─ ─ ─ ─ ─ ─ ─ ─│─ ─ ─ ┐
        │          │    S401: UE capability indication │     │
        │          │◄─────────────────────────────────┤     │
        │          │                                   │     │
        │          │    S402: CSI feedback configuration message │
        │          ├──────────────────────────────────►     │
RRC setup          │                                   │     │
        └ ─ ─ ─ ─ ─│─ ─ ─ ─ ─ ─ ─ ─ ─ ─ ─ ─ ─ ─ ─ ─ ─ ─│─ ─ ─ ┘
        ┌──────────┴───────────────────────────────────┴──────────┐
        │         S403: DL transmission and CSI feedback           │
        └──────────┬───────────────────────────────────┬──────────┘
                   │                           ┌────────┴────────┐
                   │                           │    S404: Data   │
                   │                           │  aided channel  │
                   │                           │    estimation   │
                   │                           └────────┬────────┘
                   │                           ┌────────┴────────┐
                   │                           │     S405:       │
                   │                           │  Determination  │
                   │                           │  of (L, P) pair │
                   │                           └────────┬────────┘
        ┌ ─ ─ ─ ─ ─│─ ─ ─ ─ ─ ─ ─ ─ ─ ─ ─ ─ ─ ─ ─ ─ ─ ─│─ ─ ─ ┐
        │          │   S406: Trigger RRC reconfiguration message │
        │          │◄─────────────────────────────────┤     │
        │          │                                   │     │
        │          │    S407: RRC reconfiguration message │   │
RRC                │──────────────────────────────────►     │
reconfiguration    │                                   │     │
        └ ─ ─ ─ ─ ─│─ ─ ─ ─ ─ ─ ─ ─ ─ ─ ─ ─ ─ ─ ─ ─ ─ ─│─ ─ ─ ┘
                   │                                   │
```

Fig. 4

**Fig. 5**

Fig. 6

700

707   706

705

703

708

701

702a

704

702

702b

Fig. 7

| S801 | Determining an optimal pair comprising a channel state information feedback size threshold defining a maximum number of bits for channel state information feedback, and a channel state information reference signal pattern, wherein the optimal pair is optimal for a user equipment. |

| S802 | Based on the determined optimal pair and at least one of cell load information and cell performance information, assigning to the user equipment, a pair comprising a channel state information feedback size threshold defining a maximum number of bits for channel state information feedback and channel state information reference signal pattern. |

| S803 | Transmitting, to the user equipment, information indicating the assigned pair. |

Fig. 8

S901    Receiving, from an access node, information indicating an assigned pair comprising a channel state information feedback size threshold defining a maximum number of bits for channel state information feedback, and a channel state information reference signal pattern.

S902    Determining channel state information feedback bits based on the assigned pair.

Fig. 9

S1001 | Determining an optimal pair comprising a channel state information feedback size threshold defining a maximum number of bits for channel state information feedback, and a channel state information reference signal pattern, wherein the optimal pair is optimal for a user equipment.

S1002 | Transmitting, to an access node, information indicating the determined optimal pair.

S1003 | Receiving, from the access node, information indicating an assigned pair comprising a channel state information feedback size threshold defining a maximum number of bits for channel state information feedback, and a channel state information reference signal pattern.

S1004 | Determining channel state information feedback bits based on the assigned pair.

Fig. 10

S1101 — Receiving, from a user equipment, an optimal pair comprising a channel state information feedback size threshold defining a maximum number of bits for channel state information feedback, and a channel state information reference signal pattern, wherein the optimal pair is optimal for the user equipment.

S1102 — Based on the determined optimal pair and at least one of cell load information and cell performance information, assigning to the user equipment, a pair comprising a channel state information feedback size threshold defining a maximum number of bits for channel state information feedback and channel state information reference signal pattern.

S1103 — Transmitting, to the user equipment, information indicating the assigned pair.

Fig. 11

Fig. 12

Europäisches
Patentamt

European
Patent Office

Office européen
des brevets

# EUROPEAN SEARCH REPORT

**Application Number**

EP 24 19 5912

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/271073 A1 (ERICSSON TELEFON AB L M [SE]) 29 December 2022 (2022-12-29) | 1-9 | INV. H04L1/00 |
| A | * page 9, line 4 - page 21, line 5 *<br>* claims 1-36 *<br>* figures 1-8 * | 10-15 | H04B7/06<br>H04L5/00<br>H04L25/02 |
| X | WO 2022/212253 A1 (IDAC HOLDINGS INC [US]) 6 October 2022 (2022-10-06) | 1-9 | |
| A | * paragraph [0071] - paragraph [0115] *<br>* paragraph [0140] - paragraph [0225] *<br>* paragraph [0258] - paragraph [0262] *<br>* figures 2A,2B,3 * | 10-15 | |
| X | US 2022/338189 A1 (MADADI PRANAV [US] ET AL) 20 October 2022 (2022-10-20) | 1-9 | |
| A | * paragraph [0105] - paragraph [0117] *<br>* paragraph [0129] - paragraph [0132] *<br>* claims 1-20 *<br>* figures 4-6 * | 10-15 | |
| A | WO 2023/081187 A1 (INTERDIGITAL PATENT HOLDINGS INC [US]) 11 May 2023 (2023-05-11)<br>* paragraph [0072] - paragraph [0088] *<br>* paragraph [0098] - paragraph [0112] *<br>* paragraph [0175] - paragraph [0201] *<br>* figures 2,4,5-7 * | 1-15 | **TECHNICAL FIELDS SEARCHED (IPC)**<br><br>H04L<br>H04B |
| A | US 2022/407745 A1 (LO CALEB K [US] ET AL) 22 December 2022 (2022-12-22)<br>* paragraph [0092] - paragraph [0096] *<br>* paragraph [0120] - paragraph [0200] *<br>* figures 4-25 * | 1-15 | |

The present search report has been drawn up for all claims

| Place of search | Date of completion of the search | Examiner |
|---|---|---|
| Munich | 16 January 2025 | Gardella, Simone |

EPO FORM 1503 03.82 (P04C01)

## ANNEX TO THE EUROPEAN SEARCH REPORT
## ON EUROPEAN PATENT APPLICATION NO.

EP 24 19 5912

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2025

| Patent document cited in search report | Publication date | Patent family member(s) | | Publication date |
|---|---|---|---|---|
| WO 2022271073 A1 | 29-12-2022 | EP | 4359998 A1 | 01-05-2024 |
| | | US | 2024275519 A1 | 15-08-2024 |
| | | WO | 2022271073 A1 | 29-12-2022 |
| WO 2022212253 A1 | 06-10-2022 | CN | 117280640 A | 22-12-2023 |
| | | EP | 4315673 A1 | 07-02-2024 |
| | | US | 2024187127 A1 | 06-06-2024 |
| | | WO | 2022212253 A1 | 06-10-2022 |
| US 2022338189 A1 | 20-10-2022 | CN | 117044125 A | 10-11-2023 |
| | | EP | 4302424 A1 | 10-01-2024 |
| | | KR | 20230169948 A | 18-12-2023 |
| | | US | 2022338189 A1 | 20-10-2022 |
| | | WO | 2022220642 A1 | 20-10-2022 |
| WO 2023081187 A1 | 11-05-2023 | CN | 118369858 A | 19-07-2024 |
| | | EP | 4427352 A1 | 11-09-2024 |
| | | KR | 20240096675 A | 26-06-2024 |
| | | US | 2025016593 A1 | 09-01-2025 |
| | | WO | 2023081187 A1 | 11-05-2023 |
| US 2022407745 A1 | 22-12-2022 | CN | 117561693 A | 13-02-2024 |
| | | EP | 4335071 A1 | 13-03-2024 |
| | | US | 2022407745 A1 | 22-12-2022 |
| | | WO | 2022265400 A1 | 22-12-2022 |

EPO FORM P0459

For more details about this annex : see Official Journal of the European Patent Office, No. 12/82